# EUROPÄISCHE PATENTSCHRIFT

(11) **EP 3 199 829 B1**
(45) Veröffentlichungstag und Bekanntmachung des Hinweises auf die Patenterteilung: **04.11.2020**
(21) Anmeldenummer: 17151785.7
(22) Anmeldetag: 17.01.2017
(51) Int. Cl.: F16F 15/123, F16F 15/134

(54) **TORSIONSSCHWINGUNGSDÄMPFER**
TORSIONAL VIBRATION DAMPER
AMORTISSEUR DE VIBRATION DE TORSION

(30) Priorität: 27.01.2016 DE 102016000853
(43) Veröffentlichungstag der Anmeldung: 02.08.2017
(73) Patentinhaber: BorgWarner Inc., Auburn Hills, MI 48326 (US)
(72) Erfinder: DALE, David Richmond, Bloomfield Hills, MI Michigan 48302 (US); SAXENA, Viren, 68199 Mannheim (DE); SCHNEIDER, Florian, 68766 Hockenheim (DE); HALM, Christian Bernhard, 69190 Walldorf (DE)
(74) Vertreter: Leckel, Ulf

(56) Entgegenhaltungen:
- EP-A2- 0 926 390
- US-A- 5 163 875
- US-A1- 2014 157 947

## Beschreibung

Die vorliegende Erfindung betrifft einen Torsionsschwingungsdämpfer mit zwei relativ zueinander verdrehbaren Bauelementen und mindestens einer Federanordnung zur federelastischen Drehmitnahmekopplung der Bauelemente, die eine erste Federeinrichtung mit mindestens einem Federelement und einem ersten Endstützteil und eine zweite Federeinrichtung mit mindestens einem Federelement und einem dem ersten Endstützteil in Umfangsrichtung zugewandten zweiten Endstützteil aufweist, wobei ein Mitnehmer an einem der Bauelemente vorgesehen ist, der zwischen dem ersten und zweiten Endstützteil angeordnet ist und einen dem ersten Endstützteil zugewandten ersten Stützabschnitt und einen von dem ersten Stützabschnitt in Umfangsrichtung beabstandeten, dem zweiten Endstützteil zugewandten zweiten Stützabschnitt aufweist, zwischen denen mindestens ein zwischenliegendes Federelement angeordnet ist, das über einen ersten Endabschnitt des zwischenliegenden Federelements in Umfangsrichtung an dem ersten Stützabschnitt und einen gegenüberliegenden zweiten Endabschnitt des zwischenliegenden Federelements in der entgegengesetzten Umfangsrichtung an dem zweiten Stützabschnitt abstützbar oder abgestützt ist.

Die EP 0 236 159 A1 beschreibt einen Torsionsschwingungsdämpfer für ein Kraftfahrzeug, der zwei relativ zueinander verdrehbare Bauelemente aufweist. Zur federelastischen Drehmitnahmekopplung der Bauelemente ist mindestens eine Federanordnung vorgesehen. Die Federanordnung weist eine erste Federeinrichtung mit mindestens einer Schraubenfeder und einem ersten Endstützteil und eine zweite Federeinrichtung mit mindestens einer Schraubenfeder und einem dem ersten Endstützteil in Umfangsrichtung zugewandten zweiten Endstützteil auf. In Umfangsrichtung zwischen den beiden Endstützteilen der ersten und zweiten Federeinrichtung ist ein an einem der Bauelemente angeordneter oder befestigter Mitnehmer vorgesehen. Der genannte Mitnehmer weist einen dem ersten Endstützteil zugewandten ersten Stützabschnitt und einen von dem ersten Stützabschnitt in Umfangsrichtung beabstandeten, dem zweiten Endstützteil zugewandten zweiten Stützabschnitt auf. Zwischen den beiden Stützabschnitten des Mitnehmers ist eine zwischenliegende Schraubenfeder angeordnet. Die zwischenliegende Schraubenfeder weist einen ersten Endabschnitt, der in Umfangsrichtung an dem ersten Stützabschnitt abstützbar oder abgestützt ist, und einen gegenüberliegenden zweiten Endabschnitt auf, der in der entgegengesetzten Umfangsrichtung an dem zweiten Stützabschnitt des Mitnehmers abstützbar oder abgestützt ist. Um die zwischenliegende Schraubenfeder, die zwischen dem ersten und zweiten Stützabschnitt des Mitnehmers angeordnet ist, einerseits über das erste Endstützteil der ersten Federeinrichtung und andererseits über das zweite Endstützteil der zweiten Federeinrichtung beaufschlagen zu können, ist die zwischenliegende Schraubenfeder ferner in einem Fenster eines Schlittens angeordnet, wobei der Schlitten in radialer Richtung nach außen an dem Mitnehmer abstützbar oder abgestützt ist. Dabei weist der relativ zu dem Mitnehmer in Umfangsrichtung verschiebbare Schlitten einen ersten hervorstehenden Ansatz, der in der einen Umfangsrichtung über den Mitnehmer hervorsteht und an dem das erste Endstützteil der ersten Federeinrichtung abstützbar oder abgestützt ist, und einen zweiten hervorstehenden Ansatz auf, der in der entgegengesetzten Umfangsrichtung über den Mitnehmer hervorsteht und an dem das zweite Endstützteil der zweiten Federeinrichtung abstützbar oder abgestützt ist. Mit anderen Worten ist das erste Endstützteil der ersten Federeinrichtung mittelbar über den Schlitten an dem ersten Endabschnitt der zwischenliegenden Schraubenfeder abstützbar oder abgestützt, während das zweite Endstützteil der zweiten Federeinrichtung mittelbar über den Schlitten an dem zweiten Endabschnitt des zwischenliegenden Federelements abstützbar oder abgestützt ist. Überdies ist der Schlitten derart ausgelegt, dass bei einer entsprechenden Relativdrehung des einen Bauelements in Relation zu dem anderen Bauelement das erste Endstützteil der ersten Federeinrichtung zusätzlich unmittelbar an dem ersten Stützabschnitt des Mitnehmers oder das zweite Endstützteil zusätzlich unmittelbar an dem zweiten Stützabschnitt des Mitnehmers abstützbar oder abgestützt ist.

Ein ähnlicher Torsionsschwingungsdämpfer mit einem Schlitten zur Aufnahme einer zwischenliegenden Schraubenfeder ist ferner aus der EP 0 926 390 A2 bekannt, wobei der bekannte Torsionsschwingungsdämpfer auf das erste und zweite Endstützteil verzichtet und die Federelemente der Federeinrichtungen unmittelbar an dem Schlitten abstützbar oder abgestützt sind. Aufgrund der fehlenden Endstützteile sind die Federelemente jedoch unmittelbar in radialer Richtung an einem der relativ zueinander verdrehbaren Bauteile abgestützt, wodurch sich der Einfluss der fliehkraftbedingten Reibung auf die Funktionsweise des Torsionsschwingungsdämpfers erhöht.

Es ist eine Aufgabe der vorliegenden Erfindung, den gattungsgemäßen Torsionsschwingungsdämpfer derart weiterzubilden, dass einerseits der Aufbau des Torsionsschwingungsdämpfers vereinfacht und andererseits der Einfluss fliehkraftbedingter Reibung auf die Funktionsweise des Torsionsschwingungsdämpfers reduziert ist.

Diese Aufgabe wird durch die in Patentanspruch 1 angegebenen Merkmale gelöst. Vorteilhafte Ausführungsformen der Erfindung sind Gegenstand der Unteransprüche.

Der erfindungsgemäße Torsionsschwingungsdämpfer weist zwei relativ zueinander, vorzugsweise um eine Drehachse, verdrehbare Bauelemente auf. Bei dem Torsionsschwingungsdämpfer könnte auch von einem Zweimassenschwungrad gesprochen werden, bei dem die beiden Bauelemente die entsprechend relativ zueinander verdrehbaren Massen ausbilden. Bei einem der beiden Bauelemente kann es sich um die Primär- oder Eingangsseite handeln, während es bei dem anderen Bauelement um die Sekundär- oder Ausgangsseite des Torsionsschwingungsdämpfers handeln kann. Der Torsionsschwingungsdämpfer weist ferner mindestens eine Federanordnung zur federelastischen Drehmitnahmekopplung der beiden Bauelemente auf, wobei vorzugsweise mindestens zwei Federanordnungen vorgesehen sind. Die einzelne Federanordnung weist eine erste Federeinrichtung mit mindestens einem Federelement, also beispielsweise einer Schraubenfeder, und einem ersten Endstützteil, also beispielsweise einem Gleit- oder Endschuh, auf. Darüber hinaus weist die Federanordnung eine zweite Federeinrichtung mit mindestens einem Federelement, also beispielsweise einer Schraubenfeder, und einem dem ersten Endstützteil der ersten Federeinrichtung in Umfangsrichtung zugewandten zweiten Endstützteil, also beispielsweise einem Gleit- oder/und Endschuh, auf. Die genannten Endstützteile sind separat voneinander ausgebildet und vorzugsweise aus Kunststoff gefertigt. Darüber hinaus ist an einem der beiden Bauelemente ein Mitnehmer vorgesehen, der sich vorzugsweise ausgehend von dem zugehörigen Bauelement in radialer Richtung erstreckt. Bei dem hierin erwähnten Mitnehmer kann je nach Ausbildung auch von einer Mitnehmeranordnung gesprochen werden. Der Mitnehmer, der vorzugsweise an dem zugehörigen Bauelement befestigt oder einstückig mit diesem ausgebildet ist, ist in Umfangsrichtung zwischen dem ersten Endstützteil der ersten Federeinrichtung einerseits und dem zweiten Endstützteil der zweiten Federeinrichtung andererseits angeordnet. Der Mitnehmer weist einen dem ersten Endstützteil der ersten Federeinrichtung zugewandten ersten Stützabschnitt und einen von dem ersten Stützabschnitt in Umfangsrichtung beabstandeten, dem zweiten Endstützteil zugewandten zweiten Stützabschnitt auf. Sollten die beiden Stützabschnitte außer über das Bauelement selbst, an dem der Mitnehmer angeordnet ist, keine darüber hinausgehende Verbindung aufweisen, so kann - wie bereits vorangehend angedeutet - bei dem Mitnehmer auch von einer Mitnehmeranordnung gesprochen werden. Zwischen den in Umfangsrichtung voneinander beabstandeten beiden Stützabschnitten des Mitnehmers ist mindestens ein zwischenliegendes Federelement, also beispielsweise eine Schraubenfeder, angeordnet. Das mindestens eine zwischenliegende Federelement weist dabei einen in die eine Umfangsrichtung weisenden ersten Endabschnitt und einen in die entgegengesetzte Umfangsrichtung weisenden zweiten Endabschnitt auf. Dabei ist das zwischenliegende Federelement über den ersten Endabschnitt in Umfangsrichtung an dem ersten Stützabschnitt des Mitnehmers und über den zweiten Endabschnitt in der entgegengesetzten Umfangsrichtung an dem zweiten Stützabschnitt des Mitnehmers abstützbar oder abgestützt. Auf einen zusätzlichen Schlitten zur Aufnahme und Beaufschlagung des zwischenliegenden Federelements, wie dieser aus der EP 0 236 159 A1 bekannt ist, wird jedoch verzichtet. Das erste Endstützteil der ersten Federeinrichtung ist vielmehr derart ausgebildet, dass dieses unmittelbar an dem ersten Endabschnitt des zwischenliegenden Federelements abstützbar oder abgestützt ist, während das zweite Endstützteil der zweiten Federeinrichtung derart ausgebildet ist, dass dieses unmittelbar an dem zweiten Endabschnitt des zwischenliegenden Federelements abstützbar oder abgestützt ist. Hierdurch wird nicht nur ein besonders einfacher und kompakter Aufbau mit reduzierter Teilezahl, Teilevielfalt und reduziertem Gewicht erzielt, vielmehr ist auch eine Reduzierung fliehkraftbedingter Reibung innerhalb des Torsionsschwingungsdämpfers erzielbar.

Wie bereits eingangs beschrieben, sind die zwei Bauelemente des Torsionsschwingungsdämpfers relativ zueinander verdrehbar. Naturgemäß sind die beiden Bauelemente aufgrund der federelastischen Drehmitnahmekopplung durch die Federanordnung dabei lediglich in einem vorgegebenen Verdrehwinkelbereich relativ zueinander verdrehbar. In einer bevorzugten Ausführungsform des erfindungsgemäßen Torsionsschwingungsdämpfers ist das erste Endstützteil der ersten Federeinrichtung oder/und das zweite Endstützteil der zweiten Federeinrichtung und der Mitnehmer derart ausgebildet, dass das erste Endstützteil der ersten Federeinrichtung in keiner der möglichen Relativdrehstellungen zwischen den beiden Bauelementen unmittelbar an dem Mitnehmer, vorzugsweise dem ersten Stützabschnitt des Mitnehmers, oder/und das zweite Endstützteil der zweiten Federeinrichtung in keiner der möglichen Relativdrehstellungen zwischen den beiden Bauelementen unmittelbar an dem Mitnehmer, vorzugsweise dem zweiten Stützabschnitt des Mitnehmers, abstützbar oder abgestützt. In beiden genannten Fällen betrifft die Abstützbarkeit oder Abstützung vorzugsweise die Abstützbarkeit oder Abstützung in Umfangsrichtung an dem Mitnehmer bzw. dem jeweils zugeordneten Stützabschnitt. Hierdurch wird ein Anschlagen des ersten Endstützteils an dem Mitnehmer bzw. dem ersten Stützabschnitt des Mitnehmers oder/und des zweiten Endstützteils an dem Mitnehmer bzw. dem zweiten Stützabschnitt des Mitnehmers vermieden. Bei dieser Ausführungsform ist es bevorzugt, wenn das mindestens eine zwischenliegende Federelement auf Block geht und somit nicht mehr komprimierbar ist, ehe das jeweilige Endstützteil an dem Mitnehmer oder dem zugehörigen Stützabschnitt anschlägt. Alternativ ist es bevorzugt, wenn dem mindestens einen zwischenliegenden Federelement eine Einrichtung zugeordnet ist, die ein Auf-Block-Gehen des mindestens einen zwischenliegenden Federelements verhindert, so dass dieses nicht mehr komprimierbar ist, ehe das jeweilige Endstützteil der Federeinrichtungen an dem Mitnehmer bzw. dem jeweiligen Stützabschnitt des Mitnehmers anschlägt.

In einer besonders bevorzugten Ausführungsform des erfindungsgemäßen Torsionsschwingungsdämpfers ist der Mitnehmer zumindest teilweise in einen ersten Axialabschnitt und einen zweiten Axialabschnitt unterteilt, wobei die beiden Axialabschnitte unter Ausbildung eines in axialer Richtung zwischen den Axialabschnitten ausgebildeten Freiraums voneinander beabstandet sind, in den das erste Endstützteil der ersten Federeinrichtung und das zweite Endstützteil der zweiten Federeinrichtung zum Zwecke der Abstützung an dem jeweiligen Endabschnitt des zwischenliegenden Federelements in Umfangsrichtung einbringbar oder eingebracht sind. Dank dieser Ausführungsform können die Endstützteile der Federeinrichtungen relativ zentral oder mittig an dem zugehörigen Endabschnitt des zwischenliegenden Federelements angreifen oder abgestützt werden. Mithin ist es bevorzugt, wenn die Endstützteile der Federeinrichtungen bezogen auf die Federlängsachse des zwischenliegenden Federelements derart in den Freiraum einbringbar oder eingebracht sind, dass diese mittig oder zentral an dem zugehörigen Endabschnitt des zwischenliegenden Federelements abstützbar oder abgestützt sind. Es ist bei dieser Ausführungsform ferner bevorzugt, wenn die in den Freiraum eingebrachten Endstützteile beidseitig von dem in die Axialabschnitte unterteilten Mitnehmer geführt oder führbar bzw. in beiden axialen Richtungen an den einander zugewandten Seiten der Axialabschnitte abstützbar sind, um eine sichere Führung der Endstützteile der Federeinrichtungen innerhalb des Mitnehmers zwischen den Axialabschnitten zu gewährleisten.

In einer vorteilhaften Ausführungsform des erfindungsgemäßen Torsionsschwingungsdämpfers, die auf der vorangehend beschriebenen Ausführungsform basiert, ist zumindest der erste Stützabschnitt des Mitnehmers oder/und der zweite Stützabschnitt des Mitnehmers in den ersten und zweiten Axialabschnitt unterteilt, wobei es bei dieser Ausführungsform bevorzugt ist, wenn beide Stützabschnitte, also der erste Stützabschnitt und der zweite Stützabschnitt des Mitnehmers, in den ersten und zweiten Axialabschnitt unterteilt sind. Die Zweiteilung des mindestens einen Stützabschnitts des Mitnehmers bedingt eine besonders sichere Abstützung des jeweiligen Endabschnitts des zwischenliegenden Federelements in Umfangsrichtung an dem Mitnehmer. Bei dieser Ausführungsform ist es überdies bevorzugt, wenn auch der später beschriebene erste oder/und zweite Umfangsabschnitt, besonders bevorzugt der später näher beschriebene Verbindungsabschnitt, des Mitnehmers in den ersten und zweiten Axialabschnitt unterteilt ist.

In einer besonders vorteilhaften Ausführungsform des erfindungsgemäßen Torsionsschwingungsdämpfers weist zumindest eines der Endstützteile der Federeinrichtungen einen Radialabschnitt, also einen sich in radialer Richtung erstreckenden Abschnitt, auf, wobei der Radialabschnitt einen hinteren Abschnitt, an dem das Federelement der zugehörigen Federeinrichtung in Umfangsrichtung abstützbar oder abgestützt ist, und einen vorderen Abschnitt aufweist, an dem der Endabschnitt des zwischenliegenden Federelements in Umfangsrichtung abstützbar oder abgestützt ist. Dabei weist der an dem Endabschnitt des zwischenliegenden Federelements abstützbare oder abgestützte vordere Abschnitt eine geringere axiale Breite, also eine geringere Ausdehnung in axialer Richtung, als der hintere Abschnitt des Radialabschnitts auf. Indem der vordere Abschnitt des Radialabschnitts eine geringere axiale Breite als der hintere Abschnitt des Radialabschnitts aufweist, ist einerseits das Federelement der zugehörigen Federeinrichtung besonders sicher in Umfangsrichtung an dem Endstützteil abstützbar oder abgestützt, während andererseits der vordere Abschnitt des Radialabschnitts sicher und platzsparend an dem zugewandten Stützabschnitt des Mitnehmers vorbeigeführt werden kann, um an dem zugehörigen Endabschnitt des zwischenliegenden Federelements in Umfangsrichtung abgestützt werden zu können.

In einer weiteren vorteilhaften Ausführungsform des erfindungsgemäßen Torsionsschwingungsdämpfers ist die axiale Breite des vorderen Abschnitts des Radialabschnitts des jeweiligen Endstützteils gleich der oder kleiner als die axiale Breite des zuvor erwähnten Freiraums zwischen den beiden Axialabschnitten, also gleich der oder kleiner als die Ausdehnung des Freiraums in axialer Richtung. Hierdurch wird ein Einbringen oder gar Führen des Endstützteils in den oder innerhalb des Freiraums zwischen den einander gegenüberliegenden Axialabschnitten des Mitnehmers in bauraumsparender Weise ermöglicht. Alternativ oder ergänzend ist die axiale Breite des hinteren Abschnitts des Radialabschnitts des jeweiligen Endstützteils gleich der oder größer als die axiale Breite des Freiraums zwischen den Axialabschnitten, um eine sichere Abstützung des Federelements der zugehörigen Federeinrichtung und gegebenenfalls eine vorteilhafte Abstützbarkeit oder Abstützung an einem Mitnehmer an dem anderen Bauelement zu ermöglichen. Im letztgenannten Fall ist es bevorzugt, wenn die axiale Breite des hinteren Abschnitts des Radialabschnitts des jeweiligen Endstützteils gleich dem oder größer als der axiale Abstand zwischen den einander abgewandten Seiten des ersten und zweiten Axialabschnitts des Mitnehmers ist, um die zuvor erwähnten Vorteile noch zu verstärken.

In einer weiteren vorteilhaften Ausführungsform des erfindungsgemäßen Torsionsschwingungsdämpfers sind der erste und zweite Endabschnitt des zwischenliegenden Federelements in radialer Richtung nach außen an dem Mitnehmer abstützbar oder abgestützt. Dies trägt zur Reduzierung der fliehkraftbedingten Reibung innerhalb des Torsionsschwingungsdämpfers bei. Bei dem ersten und zweiten Endabschnitt kann es sich hier - wie auch vorangehend und nachfolgend - beispielsweise um zumindest eine Windung, gegebenenfalls die Endwindung, des als Schraubenfeder ausgebildeten zwischenliegenden Federelements handeln. Bei dieser Ausführungsform ist es ferner bevorzugt, wenn ein zwischen dem ersten und zweiten Endabschnitt angeordneter Zwischenabschnitt des zwischenliegenden Federelements, also beispielsweise die Windungen zwischen den Endwindungen des als Schraubenfeder ausgebildeten zwischenliegenden Federelements, zumindest bis zu einer Grenzdrehzahl gegenüber einem den Zwischenabschnitt des zwischenliegenden Federelements radial außen übergreifenden Bereich beabstandet ist oder kontaktfrei bleibt. Hierbei kann der Torsionsschwingungsdämpfer oder der Antriebsstrang, in den der Torsionsschwingungsdämpfer eingebunden ist, derart ausgebildet sein, dass diese Grenzdrehzahl nicht erreicht wird, so dass auch von einer dauerhaften Beabstandung oder Kontaktfreiheit des Zwischenabschnitts gegenüber dem radial außen übergreifenden Bereich gesprochen werden könnte.

In einer weiteren bevorzugten Ausführungsform des erfindungsgemäßen Torsionsschwingungsdämpfers, die auf der vorangehend beschriebenen Ausführungsform basiert, ist an dem ersten Stützabschnitt des Mitnehmers ein erster Umfangsabschnitt zur Abstützung des ersten Endabschnitts des zwischenliegenden Federelements in radialer Richtung nach außen und an dem zweiten Stützabschnitt des Mitnehmers ein zweiter Umfangsabschnitt zur Abstützung des zweiten Endabschnitts des zwischenliegenden Federelements in radialer Richtung nach außen vorgesehen. Bei dieser Ausführungsform können der erste Umfangsabschnitt und der zweite Umfangsabschnitt voneinander getrennt als in Umfangsrichtung vom jeweiligen Stützabschnitt hervorstehende Abschnitte ausgebildet sein, um einen besonders leichtgewichtigen Aufbau des Mitnehmers und mithin des gesamten Torsionsschwingungsdämpfers zu erzielen. Alternativ ist es jedoch ebenso möglich, den ersten Umfangsabschnitt und den zweiten Umfangsabschnitt als Abschnitte eines Verbindungsabschnitts auszubilden, der die in radialer Richtung nach außen weisenden Bereiche der Stützabschnitt in Umfangsrichtung miteinander verbindet. Hierdurch wird ein besonders stabiler Mitnehmer geschaffen, wobei das zwischenliegende Federelement besonders sicher in einem Fenster des Mitnehmers aufgenommen sein kann, das von dem Bauelement selbst, den beiden Stützabschnitten des Mitnehmers und dem Verbindungsabschnitt begrenzt wäre. Wie bereits vorangehend angedeutet, ist es bei dieser Ausführungsform bevorzugt, wenn auch der erste oder/und zweite Umfangsabschnitt oder der Verbindungsabschnitt des Mitnehmers in die zuvor erwähnten Axialabschnitte, nämlich den ersten Axialabschnitt und den zweiten Axialabschnitt, unterteilt ist.

In einer weiteren vorteilhaften Ausführungsform des erfindungsgemäßen Torsionsschwingungsdämpfers ist der den Zwischenabschnitt des zwischenliegenden Federelements radial außen übergreifende Bereich, gegenüber dem der Zwischenabschnitt zumindest bis zu einer Grenzdrehzahl beabstandet ist oder kontaktfrei bleibt, von dem Mitnehmer, vorzugsweise von dem zuvor erwähnten Verbindungsabschnitt des Mitnehmers, gebildet.

Um eine unvorteilhafte Reibung beim Komprimieren des zwischenliegenden Federelements zwischen dem jeweiligen Endabschnitt des zwischenliegenden Federelements und dem Mitnehmer, beispielsweise dem dem jeweiligen Endabschnitt der zwischenliegenden Federelement zugeordneten Umfangsabschnitt oder dem Verbindungsabschnitt des Mitnehmers, zumindest zeitweise zu vermeiden, ist eines der Bauelemente relativ zu dem anderen Bauelement des Torsionsschwingungsdämpfers von einer Ausgangsrelativdrehstellung in der einen Umfangsrichtung in eine erste Relativdrehstellung verdrehbar, in der der erste Endabschnitt des zwischenliegenden Federelements in radialer Richtung nach außen an dem ersten Endstützteil abgestützt ist. Hierbei ist es bevorzugt, wenn der genannte erste Endabschnitt des zwischenliegenden Federelements in der ersten Relativdrehstellung nicht oder nicht mehr an dem Mitnehmer oder dem ersten Umfangsabschnitt oder Verbindungsabschnitt des Mitnehmers abgestützt ist, um zumindest in der ersten Relativdrehstellung einen direkten Kontakt zwischen dem ersten Endabschnitt des zwischenliegenden Federelements und dem Mitnehmer oder dem ersten Umfangsabschnitt oder Verbindungsabschnitt des Mitnehmers zu erzielen. Da der zweite Endabschnitt des zwischenliegenden Federelements in der genannten ersten Relativdrehstellung nicht aus seiner Ausgangsposition bewegt wird, ist es bei dieser Ausführungsform überdies besonders bevorzugt, wenn der zweite Endabschnitt des zwischenliegenden Federelements in der ersten Relativdrehstellung an dem Mitnehmer oder dem zweiten Umfangsabschnitt des Mitnehmers abgestützt ist, zumal es hier nicht zu einer unvorteilhaften Reibung zwischen dem zweiten Endabschnitt des zwischenliegenden Federelements und dem Mitnehmer bzw. dem zweiten Umfangsabschnitt des Mitnehmers kommt. Alternativ oder ergänzend ist das Bauelement relativ zu dem anderen Bauelement von der Ausgangsrelativdrehstellung in der anderen bzw. entgegengesetzten Umfangsrichtung in eine zweite Relativdrehstellung verdrehbar, in der der zweite Endabschnitt des zwischenliegenden Federelements in radialer Richtung nach außen an dem zweiten Endstützteil, vorzugsweise nicht an dem Mitnehmer oder dem zweiten Umfangsabschnitt oder Verbindungsabschnitt des Mitnehmers, abgestützt ist, während der erste Endabschnitt des zwischenliegenden Federelements besonders bevorzugt in radialer Richtung nach außen an dem Mitnehmer oder dem ersten Umfangsabschnitt des Mitnehmers abgestützt ist, wobei die vorangehend genannten Vorteile hier in entsprechender oder analoger Weise gelten.

In einer weiteren bevorzugten Ausführungsform des erfindungsgemäßen Torsionsschwingungsdämpfers weist das erste Endstützteil der ersten Federeinrichtung einen den ersten Endabschnitt des zwischenliegenden Federelements zumindest in der ersten Relativdrehstellung radial außen übergreifenden ersten Umfangsabschnitt auf, an dem der erste Endabschnitt des zwischenliegenden Federelements in radialer Richtung nach außen abstützbar oder abgestützt ist. Hierbei ist es bevorzugt, wenn der erste Umfangsabschnitt des ersten Endstützteils in Umfangsrichtung über den zuvor erwähnten Radialabschnitt des ersten Endstützteils hervorsteht. Alternativ oder ergänzend weist das zweite Endstützteil der zweiten Federeinrichtung einen den zweiten Endabschnitt des zwischenliegenden Federelements zumindest in der zweiten Relativdrehstellung radial außen übergreifenden ersten Umfangsabschnitt auf, an dem der zweite Endabschnitt des zwischenliegenden Federelements in radialer Richtung nach außen abstützbar oder abgestützt ist. Der erste Umfangsabschnitt des zweiten Endstützteils steht hierbei ebenfalls vorzugsweise in Umfangsrichtung über den zuvor erwähnten Radialabschnitt des zweiten Endstützteils hervor.

In einer weiteren vorteilhaften Ausführungsform des erfindungsgemäßen Torsionsschwingungsdämpfers weist das erste Endstützteil einen das Federelement der ersten Federeinrichtung radial außen übergreifenden zweiten Umfangsabschnitt auf, an dem das Federelement der ersten Federeinrichtung in radialer Richtung nach außen abstützbar oder abgestützt ist. Auch der zweite Umfangsabschnitt des ersten Endstützteils steht vorzugsweise in Umfangsrichtung über den zuvor erwähnten Radialabschnitt des ersten Endstützteils hervor. Alternativ oder ergänzend weist das zweite Endstützteil der zweiten Federeinrichtung einen das Federelement der zweiten Federeinrichtung radial außen übergreifenden zweiten Umfangsabschnitt auf, an dem das Federelement der zweiten Federeinrichtung in radialer Richtung nach außen abstützbar oder abgestützt ist. Auch der zweite Umfangsabschnitt des zweiten Endstützteils steht vorzugsweise in Umfangsrichtung über den zuvor erwähnten Radialabschnitt des zweiten Endstützteils hervor.

In einer weiteren vorteilhaften Ausführungsform des erfindungsgemäßen Torsionsschwingungsdämpfers weist der erste Umfangsabschnitt des ersten Endstützteils eine geringere axiale Breite als der zweite Umfangsabschnitt des ersten Endstützteils auf, um einerseits über den zweiten Umfangsabschnitt eine sichere Abstützung des Federelements der ersten Federeinrichtung und andererseits eine bauraumsparende Anordnung des ersten Umfangsabschnitts im Bereich des Mitnehmers bzw. im Bereich des zwischenliegenden Federelements zu ermöglichen. Alternativ oder ergänzend weist der erste Umfangsabschnitt des zweiten Endstützteils eine geringere axiale Breite als der zweite Umfangsabschnitt des zweiten Endstützteils auf, um die zuvor unter Bezugnahme auf das erste Endstützteil genannten Vorteile auch oder alternativ bei dem zweiten Endstützteil zu erzielen.

In einer weiteren bevorzugten Ausführungsform des erfindungsgemäßen Torsionsschwingungsdämpfers weist der erste Umfangsabschnitt des ersten oder/und zweiten Endstützteils die gleiche axiale Breite wie der vordere Abschnitt des Radialabschnitts des ersten oder/und zweiten Endstützteils auf, um eine platzsparende Anordnung sowohl des ersten Umfangsabschnitts als auch des vorderen Abschnitts des Radialabschnitts des ersten oder/und zweiten Endstützteils im Bereich des Mitnehmers und des zwischenliegenden Federelements zu erzielen, mithin einen besonders kompakten Aufbau zu erreichen, wobei darüber hinaus die Fertigung des ersten oder/und zweiten Endstützteils vereinfacht ist.

In einer weiteren bevorzugten Ausführungsform des erfindungsgemäßen Torsionsschwingungsdämpfers sind das erste und zweite Endstützteil baugleich oder als Gleichteile ausgebildet, um die Fertigung zu vereinfachen und die Teilevielfalt zu reduzieren. Auf diese Weise kann insbesondere ein Fehleinbau vermieden werden.

In einer weiteren vorteilhaften Ausführungsform des erfindungsgemäßen Torsionsschwingungsdämpfers sind die Endstützteile der beiden Federeinrichtungen in radialer Richtung nach außen an einem die erste und zweite Federeinrichtung radial außen übergreifenden Abschnitt des Torsionsschwingungsdämpfers abstützbar oder abgestützt. Sinngemäß wird hier eine Federanordnung geschaffen, die die zumindest relativ reibungsärmer arbeitenden zwischenliegenden Federelemente mit einer reibungsbehafteten bzw. gedämpften ersten und zweiten Federeinrichtung in vorteilhafter Weise kombiniert.

In einer weiteren vorteilhaften Ausführungsform des erfindungsgemäßen Torsionsschwingungsdämpfers sind die erste und zweite Federeinrichtung in Umfangsrichtung fluchtend mit dem mindestens einen zwischenliegenden Federelement angeordnet, um im Hinblick auf den Bauraum in radialer Richtung einen besonders kompakten Aufbau des Torsionsschwingungsdämpfers zu erzielen, was beispielsweise in Drehmomentübertragungseinrichtungen von Vorteil ist, bei denen die erste und zweite Federeinrichtung des Torsionsschwingungsdämpfers und auch das mindestens eine zwischenliegende Federelement in radialer Richtung geschachtelt mit einer Kupplung oder Ähnlichem angeordnet werden müssen, um die Drehmomentübertragungseinrichtung an einen relativ kleinen dafür vorgesehenen axialen Bauraum anzupassen, ohne hierdurch die Ausdehnung der Drehmomentübertragungseinrichtung mit einem solchen Torsionsschwingungsdämpfer in axialer und radialer Richtung wesentlich zu vergrößern.

In einer weiteren vorteilhaften Ausführungsform des erfindungsgemäßen Torsionsschwingungsdämpfers ist der die erste und zweite Federeinrichtung radial außen übergreifende Abschnitt von einem der beiden Bauelemente des Torsionsschwingungsdämpfers gebildet.

Gemäß einer weiteren vorteilhaften Ausführungsform des erfindungsgemäßen Torsionsschwingungsdämpfers weist die erste oder/und zweite Federeinrichtung mindestens ein weiteres Stützteil zwischen den in Umfangsrichtung weisenden Enden der jeweiligen Federeinrichtung auf, über das die jeweilige Federeinrichtung in radialer Richtung nach außen an einem die jeweilige Federeinrichtung radial außen übergreifenden Abschnitt des Torsionsschwingungsdämpfers abstützbar oder abgestützt ist, wobei der die jeweilige Federeinrichtung radial außen übergreifende Abschnitt vorzugsweise von einem der Bauelemente des Torsionsschwingungsdämpfers gebildet ist. Bei dem weiteren Stützteil handelt es sich mithin nicht um ein weiteres Endstützteil. Auch ist es bei dieser Ausführungsform bevorzugt, wenn die erste oder/und zweite Federeinrichtung unter Beabstandung des mindestens einen Federelements der ersten oder/und zweiten Federeinrichtung gegenüber dem die jeweilige Federeinrichtung in radialer Richtung nach außen übergreifenden Abschnitt über das mindestens eine weitere Stützteil abstützbar oder abgestützt ist. Hierbei ist es überdies bevorzugt, wenn eine solche Beabstandung über den gesamten Drehzahlbereich, für den der Torsionsschwingungsdämpfer ausgelegt ist, aufrechterhalten bleibt.

In einer weiteren bevorzugten Ausführungsform des erfindungsgemäßen Torsionsschwingungsdämpfers sind mindestens zwei zwischenliegende Federelemente vorgesehen. Bei dieser Ausführungsform ist es bevorzugt, wenn die mindestens zwei zwischenliegenden Federelemente parallel zueinander angeordnet sind. Überdies ist es bei dieser Ausführungsform bevorzugt, wenn die mindestens zwei parallel zueinander angeordneten Federelemente konzentrisch zueinander angeordnet sind. Im Falle von zwei zwischenliegenden Federelementen in Form von Schraubenfedern wären diese mithin ineinander angeordnet oder geschachtelt angeordnet. Überdies ist es bei dieser Ausführungsform von Vorteil, wenn die zwischenliegenden Federelemente ausschließlich parallel zueinander angeordnet sind, zwischen den Stützabschnitten also keine in Reihe oder hintereinander geschalteten zwischenliegenden Federelemente angeordnet sind.

Wie bereits vorangehend angedeutet, ist in einer weiteren vorteilhaften Ausführungsform des erfindungsgemäßen Torsionsschwingungsdämpfers das mindestens eine zwischenliegende Federelement oder/und das mindestens eine Federelement der ersten oder/und zweiten Federeinrichtung als Schraubenfeder, vorzugsweise als gerade Schraubenfeder, ausgebildet. Alternativ könnte jedoch das mindestens eine Federelement der ersten oder/und zweiten Federeinrichtung als gebogene Schraubenfeder ausgebildet sein, während das mindestens eine zwischenliegende Federelement als gerade Schraubenfeder ausgebildet sein könnte.

Die Erfindung wird im Folgenden anhand einer beispielhaften Ausführungsform unter Bezugnahme auf die beigefügten Zeichnungen näher erläutert. Es zeigen:
- Fig. 1: eine perspektivische Explosionsdarstellung einer Ausführungsform des erfindungsgemäßen Torsionsschwingungsdämpfers,
- Fig. 2: eine Vorderansicht des zusammengesetzten Torsionsschwingungsdämpfers von Fig. 1 in teilweise geschnittener Darstellung,
- Fig. 3: eine vergrößerte Darstellung des Ausschnitts A in Fig. 2,
- Fig. 4: eine vergrößerte Darstellung des zumindest teilweise freigeschnittenen Ausschnitts B in Fig. 3,
- Fig. 5: eine Schnittdarstellung entlang der Schnittlinie C-C in Fig. 3,
- Fig. 6: eine zumindest teilweise freigeschnittene, perspektivische Darstellung des Ausschnitts A in Fig. 2,
- Fig. 7: den Torsionsschwingungsdämpfer von Fig. 2, bei dem das eine Bauelement in eine erste Relativdrehstellung relativ zu dem anderen Bauelement verdreht ist, und
- Fig. 8: eine vergrößerte Darstellung des Ausschnitts D von Fig. 7 in perspektivischer Darstellung.

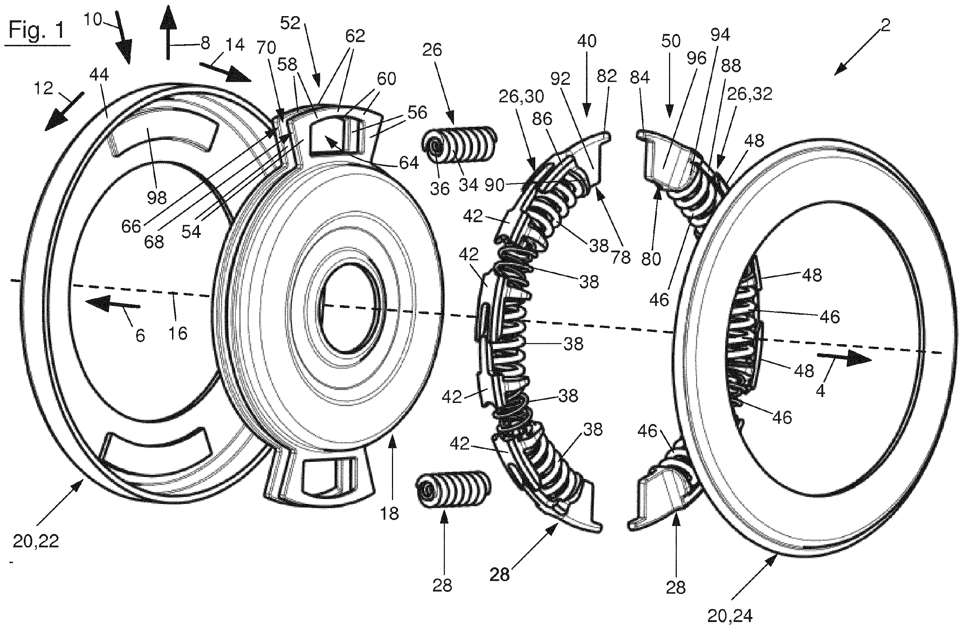

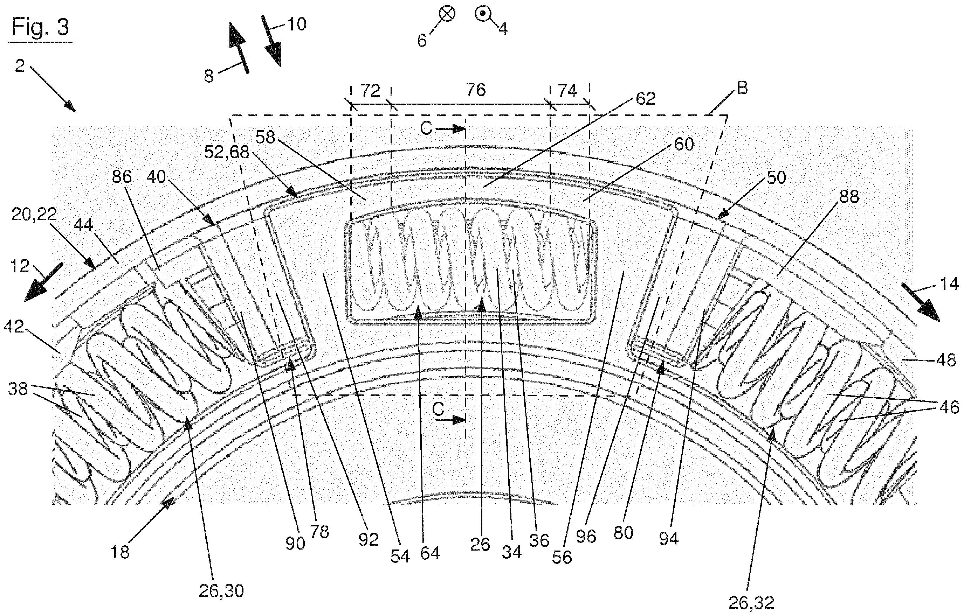

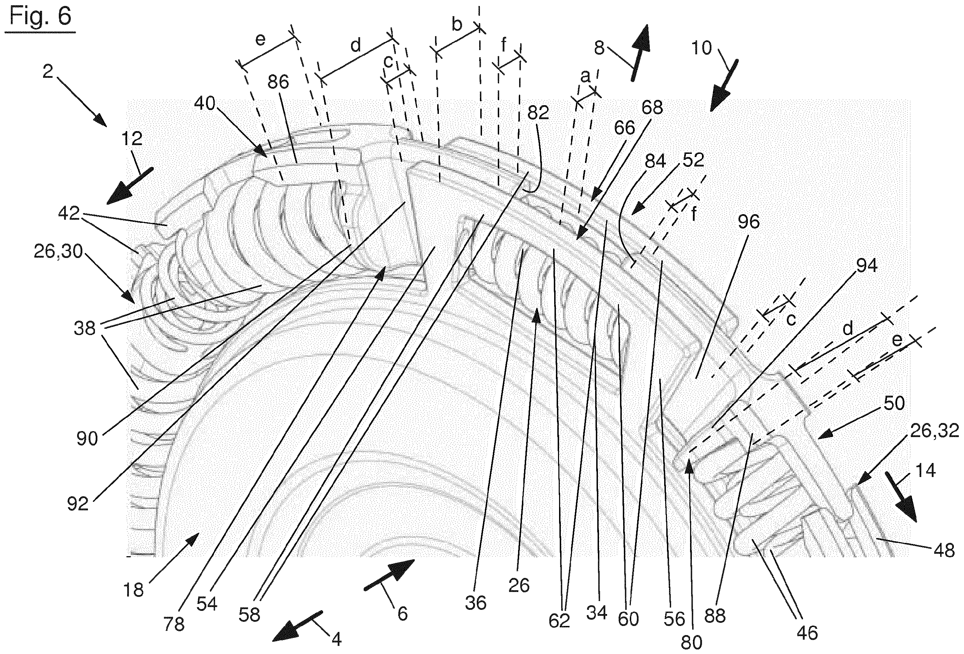

Die Fig. 1 bis 8 zeigen eine Ausführungsform des erfindungsgemäßen Torsionsschwingungsdämpfers 2. in den Figuren sind die einander entgegengesetzten axialen Richtungen 4, 6, die einander entgegengesetzten radialen Richtungen 8, 10 und die einander entgegengesetzten Umfangsrichtungen 12, 14 anhand entsprechender Pfeile dargestellt, wobei der Torsionsschwingungsdämpfer 2 bzw. dessen Elemente um eine sich in den axialen Richtungen 4, 6 erstreckende zentrale Drehachse 16 drehbar ist/sind.

Der Torsionsschwingungsdämpfer 2 weist zwei in Umfangsrichtung 12, 14 um die Drehachse 16 zumindest in begrenztem Maße relativ zueinander verdrehbare Bauelemente auf. So weist der Torsionsschwingungsdämpfer 2 zum einen ein erstes Bauelement 18 und zum anderen ein zweites Bauelement 20 auf, die relativ zueinander verdrehbar sind. Wie aus Fig. 1 ersichtlich, ist das zweite Bauelement 20 im Wesentlichen aus einer hinteren Halbschale 22 und einer vorderen Halbschale 24 zusammengesetzt, die sich in axialer Richtung 4 an die hintere Halbschale 22 anschließt, um den ringförmigen Aufnahmeraum für die später näher beschriebene mindestens eine Federanordnung zu schaffen. Um eine federelastische Drehmitnahmekopplung zwischen den beiden Bauelementen 18, 20 in den Umfangsrichtungen 12, 14 zu erzielen, ist mindestens eine Federanordnung vorgesehen. So sind in der dargestellten Ausführungsform eine erste Federanordnung 26 und eine zweite Federanordnung 28 vorgesehen. Die erste Federanordnung 26 weist eine erste Federeinrichtung 30, eine zweite Federeinrichtung 32 und mindestens ein zwischenliegendes Federelement 34 auf, wobei in der dargestellten Ausführungsform zwei zwischenliegende Federelemente 34 und 36 vorgesehen sind. Die zweite Federanordnung 28 weist im Wesentlichen den gleichen Aufbau wie die erste Federanordnung 26 auf, wobei die zweite Federeinrichtung 32 gleichermaßen die erste Federeinrichtung der zweiten Federanordnung 28 und die erste Federeinrichtung 30 der ersten Federanordnung 26 gleichermaßen die zweite Federeinrichtung der zweiten Federanordnung 28 bildet und ebenfalls zwei zwischenliegende Federelemente vorgesehen sind. Da die erste Federanordnung 26 der zweiten Federanordnung 28 im Wesentlichen entspricht, wird nachstehend lediglich die erste Federanordnung 26 beschrieben, wobei die Beschreibung in entsprechender Weise für die zweite Federanordnung 28 gilt.

Die erste Federeinrichtung 30 weist mindestens ein Federelement, hier mehrere Federelemente 38, auf, die als Schraubenfeder, hier als gerade Schraubenfedern, ausgebildet sind. Dabei sind die Federelemente 38 zum Teil in Umfangsrichtung 12, 14 hintereinander oder/und parallel zueinander angeordnet. Darüber hinaus weist die erste Federeinrichtung 30 ein erstes Endstützteil 40 auf, das auf der in Umfangsrichtung 14 weisenden Seite der ersten Federeinrichtung 30 angeordnet ist. Des Weiteren weist die erste Federeinrichtung 30 mindestens ein weiteres Stützteil 42, hier mehrere Stützteile 42, auf, die zwischen den in die Umfangsrichtungen 12, 14 weisenden Enden der ersten Federeinrichtung 30 angeordnet sind, und über die die erste Federeinrichtung 30 in radialer Richtung 8 nach außen an einem die erste Federeinrichtung 30 radial außen übergreifenden Abschnitt abstützbar oder abgestützt ist. In der dargestellten Ausführungsform wird der die erste Federeinrichtung 30 radial außen übergreifende Abschnitt 44 von einem Abschnitt des zweiten Bauelementes 20 gebildet. In entsprechender Weise weist die zweite Federeinrichtung 32 mehrere als gerade Schraubenfedern ausgebildete Federelemente 46, Stützteile 48 zur Abstützung der zweiten Federeinrichtung 32 in radialer Richtung 8 nach außen an dem radial außen übergreifenden Abschnitt 44 und ein zweites Endstützteil 50 auf. Das zweite Endstützteil 50 ist auf der in Umfangsrichtung 12 weisenden Seite der zweiten Federeinrichtung 32 angeordnet und dem ersten Endstützteil 40 der ersten Federeinrichtung 30 in Umfangsrichtung 12 zugewandt.

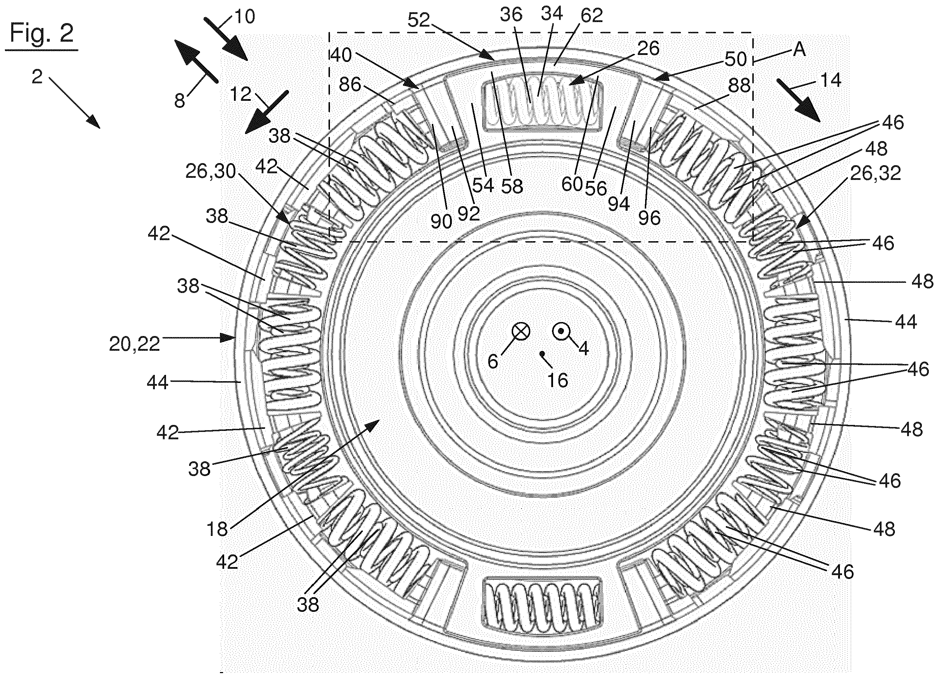

Der ersten Federanordnung 26 ist ein Mitnehmer 52 zugeordnet, der feststehend an dem ersten Bauelement 18 angeordnet ist, wobei der Mitnehmer 52, der auch als Mitnehmeranordnung bezeichnet werden könnte, in der dargestellten Ausführungsform einstückig mit dem ersten Bauelement 18 ausgebildet ist. Der Mitnehmer 52 erstreckt sich ausgehend von dem ersten Bauelement 18 in radialer Richtung 8 nach außen, so dass der Mitnehmer 52 auch als in radialer Richtung 8 hervorstehender Vorsprung bezeichnet werden könnte. Im Zusammenbauzustand nach Fig. 2 erstreckt sich der Mitnehmer 52 dabei derart in radialer Richtung 8 nach außen, dass dieser in Umfangsrichtung 12, 14 zwischen dem ersten Endstützteil 40 der ersten Federeinrichtung 30 und dem zweiten Endstützteil 50 der zweiten Federeinrichtung 32 angeordnet ist.

Der Mitnehmer 52 weist einen in radialer Richtung 8 von dem ersten Bauelement 18 hervorstehenden ersten Stützabschnitt 54 und einen in Umfangsrichtung 14 von dem ersten Stützabschnitt 54 beabstandeten zweiten Stützabschnitt 56 auf, der sich ebenfalls ausgehend von dem ersten Bauelement 18 in radialer Richtung 8 nach außen erstreckt. Mithin ist der erste Stützabschnitt 54 dem ersten Endstützteil 40 der ersten Federeinrichtung 30 zugewandt, während der zweite Stützabschnitt 56 dem zweiten Endstützteil 50 der zweiten Federeinrichtung 32 zugewandt ist. Darüber hinaus weist der Mitnehmer 52 einen ersten Umfangsabschnitt 58 auf, der sich ausgehend von dem in radialer Richtung 8 nach außen weisenden Bereich des ersten Stützabschnitts 54 in Umfangsrichtung 14 erstreckt. An dem zweiten Stützabschnitt 56 ist ein zweiter Umfangsabschnitt 60 vorgesehen, wobei sich der zweite Umfangsabschnitt 60 ausgehend von dem in radialer Richtung 8 nach außen weisenden Bereich des zweiten Stützabschnitts 56 in die entgegengesetzte Umfangsrichtung 12 erstreckt. In der dargestellten Ausführungsform sind der erste Umfangsabschnitt 58 und der zweite Umfangsabschnitt 60 als Abschnitte eines Verbindungsabschnitts 62 ausgebildet, der die in radialer Richtung 8 nach außen weisenden Bereiche des ersten und zweiten Stützabschnitts 54, 56 in Umfangsrichtung 12, 14 miteinander verbindet. Mithin ist ein Mitnehmer 52 mit einer fensterartigen Öffnung 64 geschaffen, die in Umfangsrichtung 12 durch den ersten Stützabschnitt 54, in Umfangsrichtung 14 durch den zweiten Stützabschnitt 56, in radialer Richtung 8 nach außen durch den Verbindungsabschnitt 62 und in radialer Richtung 10 nach innen durch das erste Bauelement 18 begrenzt ist.

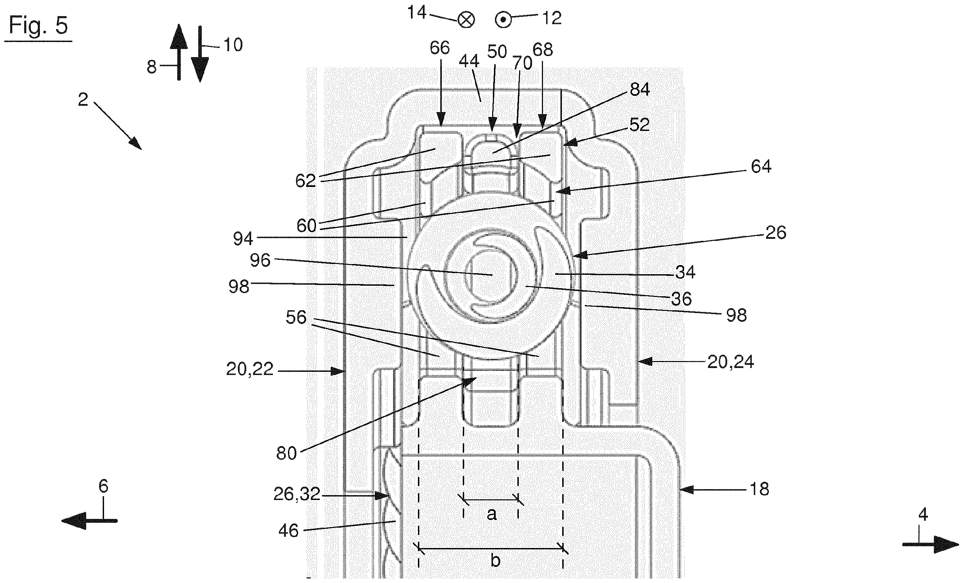

Wie insbesondere aus den Fig. 1 und 5 ersichtlich, ist der Mitnehmer 52 in einen ersten Axialabschnitt 66 und einen zweiten Axialabschnitt 68 unterteilt, wobei der zweite Axialabschnitt 68 unter Ausbildung eines in axialer Richtung 4, 6 zwischen den Axialabschnitten 66, 68 ausgebildeten Freiraums 70 in axialer Richtung 4 von dem ersten Axialabschnitt 66 beabstandet ist. Wie aus den Fig. 1 und 5 ersichtlich, sind insbesondere der erste Stützabschnitt 54, der zweite Stützabschnitt 56, der erste Umfangsabschnitt 58, der zweite Umfangsabschnitt 60 und der Verbindungsabschnitt 62, der die beiden Umfangsabschnitte 58, 60 ausbildet, in den ersten Axialabschnitt 66 und den zweiten Axialabschnitt 68 unterteilt. Der Freiraum 70 ist derart ausgebildet, dass das erste Endstützteil 40 zum Zwecke der Abstützung an den später näher beschriebenen zwischenliegenden Federelementen 34, 36 in Umfangsrichtung 14 und das zweite Endstützteil 50 zum Zwecke der Abstützung an den später näher beschriebenen zwischenliegenden Federelementen 34, 36 in Umfangsrichtung 12 in den Freiraum 70 einbringbar oder eingebracht ist. Der Freiraum 70 weist eine in Fig. 5 angedeutete axiale Breite a in axialer Richtung 4, 6 auf. Darüber hinaus ist ein axialer Abstand b in axialer Richtung 4, 6 zwischen den einander in axialer Richtung 4, 6 abgewandten Seiten des ersten und zweiten Axialabschnitts 66, 68 in Fig. 5 angedeutet.

In Umfangsrichtung 12, 14 zwischen dem ersten Stützabschnitt 54 einerseits und dem zweiten Stützabschnitt 56 andererseits des Mitnehmers 52 ist das zuvor erwähnte mindestens eine zwischenliegende Federelement 34 angeordnet, wobei in der vorliegenden Ausführungsform zwei zwischenliegende Federelemente, nämlich die zwischenliegenden Federelemente 34, 36, vorgesehen sind. Das mindestens eine zwischenliegende Federelement 34, 36 weist einen in Umfangsrichtung 12 weisenden ersten Endabschnitt 72 und einen in Umfangsrichtung 14 weisenden zweiten Endabschnitt 74 auf, die beispielsweise jeweils von einer Endwindung der als Schraubenfedern ausgebildeten zwischenliegenden Federelemente 34, 36 ausgebildet sein können. In der dargestellten Ausführungsform sind die zwischenliegenden Federelemente 34, 36 von geraden Schraubenfedern gebildet. In Umfangsrichtung 12, 14 zwischen den beiden Endabschnitten 72, 74 bzw. in Erstreckungsrichtung der zwischenliegenden Federelemente 34, 36 zwischen den genannten Endabschnitten 72, 74 ist hingegen ein Zwischenabschnitt 76 des mindestens einen zwischenliegenden Federelements 34 ausgebildet. Die beiden als Schraubenfedern ausgebildeten zwischenliegenden Federelemente 34, 36 sind parallel und konzentrisch zueinander angeordnet, so dass das zwischenliegende Federelement 36 in dem Federinnenraum, der von den Federwindungen des zwischenliegenden Federelements 34 umgeben ist, aufgenommen ist. Wie aus den Figuren ersichtlich, sind die zwischenliegenden Federelemente 34, 36 ausschließlich parallel zueinander angeordnet, d. h., es sind keine zwischenliegenden Federelemente vorgesehen, die in Umfangsrichtung 12, 14 hintereinander oder in Reihe geschaltet sind.

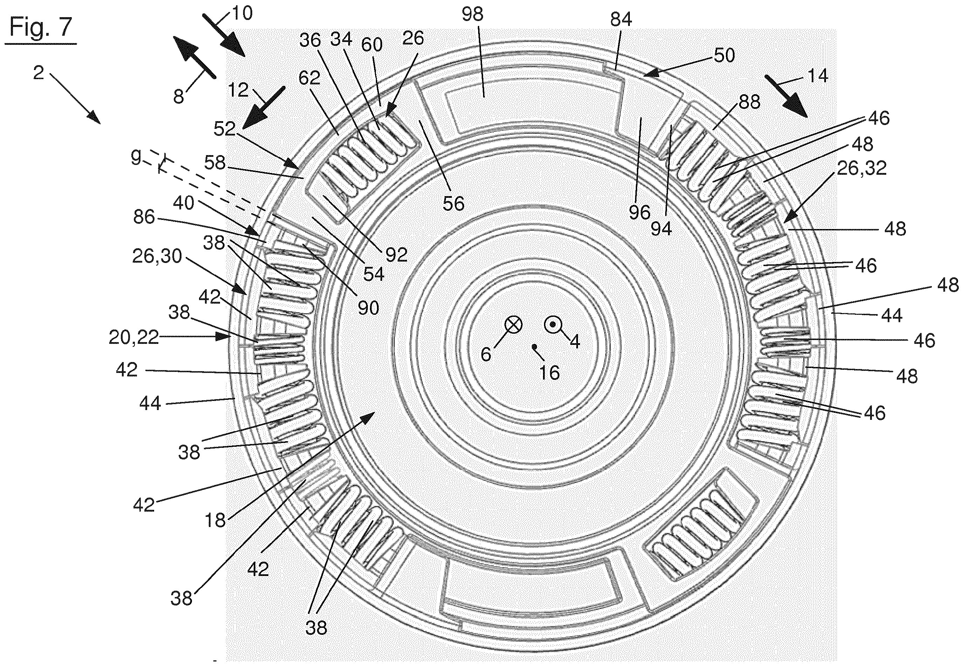

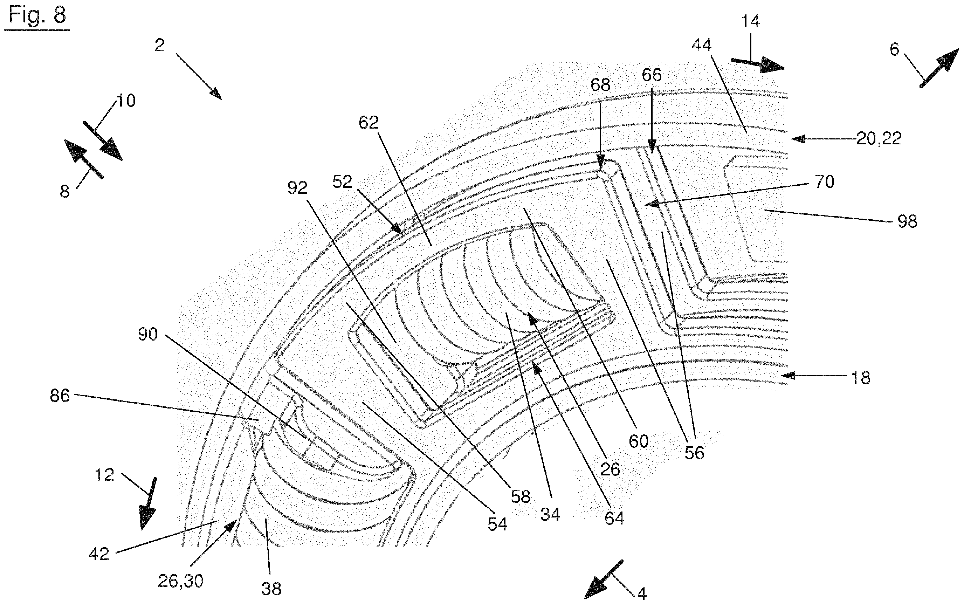

Zumindest das zwischenliegende Federelement 34, gegebenenfalls auch das zwischenliegende Federelement 36, ist über den ersten Endabschnitt 72 in Umfangsrichtung 12 an dem ersten Stützabschnitt 54 des Mitnehmers 52 und den zweiten Endabschnitt 74 in der entgegengesetzten Umfangsrichtung 14 an dem zweiten Stützabschnitt 56 des Mitnehmers 52 abstützbar oder abgestützt. Die zwischenliegenden Federelemente 34, 36, der Mitnehmer 52 und das erste und zweite Endstützteil 40, 50 sind derart ausgelegt oder ausgebildet, dass das erste Endstützteil 40, das in Umfangsrichtung 14 in den Freiraum 70 einbringbar oder eingebracht ist, in keiner der möglichen Relativdrehstellungen zwischen den beiden Bauelementen 18, 20 in Umfangsrichtung 14 unmittelbar an dem Mitnehmer 52, gegebenenfalls dem ersten Stützabschnitt 54 des Mitnehmers 52, und das zweite Endstützteil 50, das in Umfangsrichtung 12 in den Freiraum 70 einbringbar oder eingebracht ist, in keiner der möglichen Relativdrehstellungen zwischen den beiden Bauelementen 18, 20 in Umfangsrichtung 12 unmittelbar an dem Mitnehmer 52, gegebenenfalls dem zweiten Stützabschnitt 56 des Mitnehmers 52, abstützbar oder abgestützt ist, wie dies später nochmals unter Bezugnahme auf die Fig. 7 und 8 aufgegriffen werden soll.

Das zwischenliegende Federelement 34 ist derart in der fensterartigen Öffnung 64 des Mitnehmers 52 angeordnet, dass der erste und zweite Endabschnitt 72, 74 des zwischenliegenden Federelements 34 in radialer Richtung 8 nach außen an dem Mitnehmer 52 abstützbar oder abgestützt sind. Genauer gesagt ist der erste Endabschnitt 72 des zwischenliegenden Federelements 34 in radialer Richtung 8 nach außen an dem ersten Umfangsabschnitt 58 des Mitnehmers 52 abstützbar oder abgestützt, während der zweite Endabschnitt 74 des zwischenliegenden Federelements 34 in radialer Richtung 8 nach außen an dem zweiten Umfangsabschnitt 60 des Mitnehmers 52 abstützbar oder abgestützt ist. Dabei erfolgt die Abstützung in radialer Richtung 8 nach außen an den Umfangsabschnitten 58, 60 derart, dass der zwischen dem ersten und zweiten Endabschnitt 72, 74 angeordnete Zwischenabschnitt 76 des zwischenliegenden Federelements 34 zumindest bis zu einer Grenzdrehzahl gegenüber einem den Zwischenabschnitt 76 in radialer Richtung 8 außen übergreifenden Bereich beabstandet ist oder kontaktfrei bleibt, wobei der den Zwischenabschnitt 76 radial außen übergreifende Bereich hier von dem Mitnehmer 52 selbst, genauer gesagt von dem Verbindungsabschnitt 62 des Mitnehmers 52, gebildet ist. Hierbei ist es bevorzugt, wenn der Antriebsstrang oder die Drehmomentübertragungseinrichtung, innerhalb derer der Torsionsschwingungsdämpfer 2 angeordnet ist oder Verwendung findet, derart ausgelegt ist, dass die erwähnte Grenzdrehzahl nicht überschritten wird, so dass von einer dauerhaften Beabstandung des Zwischenabschnitts 76 von dem radial außen übergreifenden Bereich des Mitnehmers 52 gesprochen werden könnte.

Die zuvor erwähnten Endstützteile 40 und 50 sind - wenngleich dies in den Figuren nicht gezeigt ist - vorzugsweise als Gleichteile ausgebildet. Selbst wenn dies, wie im vorliegenden Fall, nicht der Fall sein sollte, so sind diese doch zumindest im Wesentlichen baugleich ausgebildet. So weisen die Endstützteile 40, 50 jeweils einen in radialer Richtung 10 hervorstehenden Radialabschnitt 78, 80, einen sich in radialer Richtung 8 nach außen an den Radialabschnitt 78, 80 anschließenden ersten Umfangsabschnitt 82, 84 und einen sich in radialer Richtung 8 nach außen an den Radialabschnitt 78, 80 anschließenden zweiten Umfangsabschnitt 86, 88 auf. Der erste Umfangsabschnitt 82 des ersten Endstützteils 40 steht in Umfangsrichtung 14 über den Radialabschnitt 78 hervor, während der erste Umfangsabschnitt 84 des zweiten Endstützteils 50 in der entgegengesetzten Umfangsrichtung 12 über den Radialabschnitt 80 hervorsteht. In ähnlicher Weise steht der zweite Umfangsabschnitt 86 des ersten Endstützteils 40 in Umfangsrichtung 12 über den Radialabschnitt 78 hervor, während der zweite Umfangsabschnitt 88 in der entgegengesetzten Umfangsrichtung 14 über den Radialabschnitt 80 des zweiten Endstützteils 50 hervorsteht. Der Radialabschnitt 78 des ersten Endstützteils 40 setzt sich aus einem hinteren Abschnitt 90, an dem das Federelement 38 der ersten Federeinrichtung 30 in Umfangsrichtung 14 abstützbar oder abgestützt ist, und einem sich in Umfangsrichtung 14 an den hinteren Abschnitt 90 anschließenden vorderen Abschnitt 92 zusammen, an dem der erste Endabschnitt 72 des zwischenliegenden Federelements 34, 36 abstützbar oder abgestützt ist. In entsprechender Weise setzt sich der Radialabschnitt 80 des zweiten Endstützteils 50 aus einem hinteren Abschnitt 94, an dem das Federelement 46 der zweiten Federeinrichtung 32 in Umfangsrichtung 12 abstützbar oder abgestützt ist, und einem in Umfangsrichtung 12 auf den hinteren Abschnitt 94 folgenden vorderen Abschnitt 96 zusammen, an dem der zweite Endabschnitt 74 des zwischenliegenden Federelements 34, 36 in Umfangsrichtung 14 abstützbar oder abgestützt ist. Dabei weist jeweils der vordere Abschnitt 92 bzw. 96 eine geringere axiale Breite c als der hintere Abschnitt 90 bzw. 94 auf, dessen axiale Breite in den Figuren anhand des Bezugszeichens d angedeutet ist. Auch ist die axiale Breite c des jeweiligen vorderen Abschnitts 92 bzw. 96 gleich der oder kleiner als die axiale Breite a des zuvor erwähnten Freiraums 70 zwischen den beiden Axialabschnitten 66, 68 des Mitnehmers 52, um das jeweilige Endstützteil 40 bzw. 50 über den jeweiligen vorderen Abschnitt 92 bzw. 96 in den Freiraum 70 einbringen zu können. Hier ist eine axiale Breite c bevorzugt, die kleiner als die axiale Breite a des Freiraums 70 ist, um eine Reibung zwischen dem jeweiligen vorderen Abschnitt 92 bzw. 96 und den einander zugewandten Seiten der Axialabschnitte 66, 68 gering zu halten, wenngleich bei einer geringfügig kleineren axialen Breite c eine vorteilhafte Abstützung in axialer Richtung 4, 6 des jeweiligen Endstützteils 40 bzw. 50 an den einander zugewandten Seiten der beiden Axialabschnitte 66, 68 des Mitnehmers 52 und somit eine vorteilhafte Führung des in den Freiraum 70 eingebrachten Endstützteils 40 bzw. 50 innerhalb des Mitnehmers 52 möglich ist. Die axiale Breite des jeweiligen hinteren Abschnitts 90 bzw. 94 ist hingegen gleich der oder größer als die axiale Breite a des Freiraums 70 zwischen den Axialabschnitten 66, 68, wobei eine axiale Breite d bevorzugt ist, die größer als die axiale Breite a des Freiraums 70 ausgebildet ist. In diesem Zusammenhang hat es sich als vorteilhaft herausgestellt, wenn die axiale Breite d des hinteren Abschnitts 90 bzw. 94 gleich dem axialen Abstand b oder größer als der axiale Abstand b zwischen den einander abgewandten Seiten des ersten und zweiten Axialabschnitts 66, 68 des Mitnehmers 52 ist, um eine sichere Abstützung des Federelements 38 bzw. 46 der ersten Federeinrichtung 30 bzw. der zweiten Federeinrichtung 32 in Umfangsrichtung 14 bzw. Umfangsrichtung 12 an dem ersten Endstützteil 40 bzw. dem zweiten Endstützteil 50 zu erzielen.

Der zweite Umfangsabschnitt 86 des ersten Endstützteils 40 steht derart in Umfangsrichtung 12 über den Radialabschnitt 78 hervor, dass das mindestens eine Federelement 38 in radialer Richtung 8 nach außen an dem zweiten Umfangsabschnitt 86 abstützbar oder abgestützt ist. In entsprechender Weise steht der zweite Umfangsabschnitt 88 des zweiten Endstützteils 50 derart in Umfangsrichtung 14 über den Radialabschnitt 80 hervor, dass das mindestens eine Federelement 46 der zweiten Federeinrichtung 32 in radialer Richtung 8 nach außen an dem zweiten Umfangsabschnitt 88 abstützbar oder abgestützt ist. Dabei weisen die zweiten Umfangsabschnitte 86, 88 jeweils eine axiale Breite e auf, die größer als eine axiale Breite des jeweils zugehörigen ersten Umfangsabschnitts 82 bzw. 84 ausgebildet ist. Die axiale Breite f des ersten Umfangsabschnitts 82 bzw. 84 kann hingegen in vorteilhafter Weise der axialen Breite c des zugehörigen vorderen Abschnitts 92 bzw. 96 entsprechen.

In der dargestellten Ausführungsform sind nicht nur die Stützteile 42 bzw. 48 der ersten bzw. zweiten Federeinrichtung 30, 32 in radialer Richtung 8 nach außen an dem radial außen übergreifenden Abschnitt 44 abgestützt, sondern vielmehr auch das erste und zweite Endstützteil 40, 50. Die Abstützung in radialer Richtung 8 nach außen an dem radial außen übergreifenden Abschnitt 44, der von dem zweiten Bauelement 20 gebildet ist, erfolgt hierbei vorzugsweise über den ersten oder/und zweiten Umfangsabschnitt 82, 86 bzw. den ersten oder/und zweiten Umfangsabschnitt 84, 88 des jeweiligen Endstützteils 40 bzw. 50.

Nachstehend werden weitere Merkmale sowie die Funktionsweise des Torsionsschwingungsdämpfers 2 unter Bezugnahme auf die Figuren beschrieben.

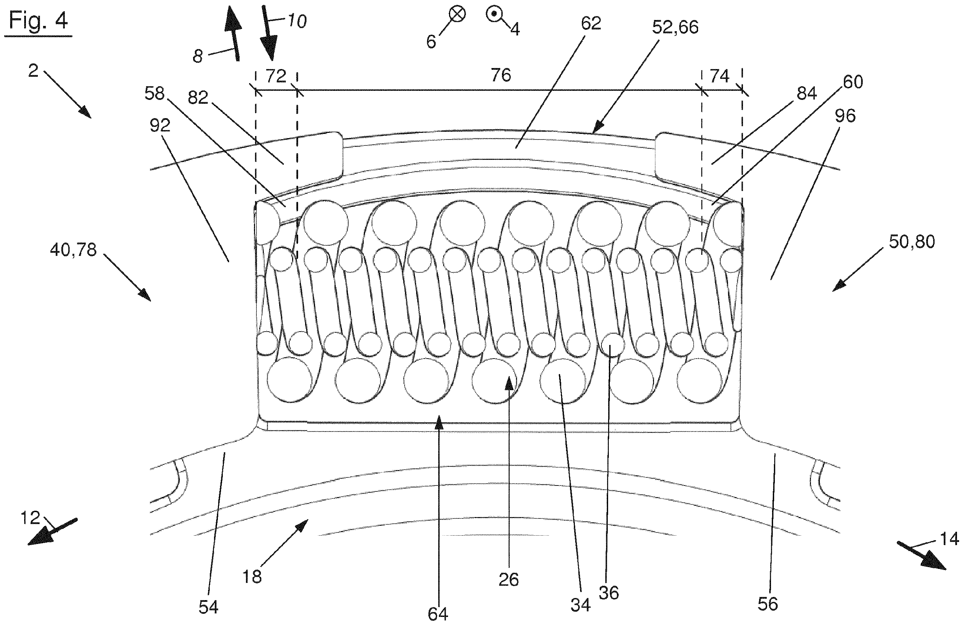

Die Fig. 2 bis 6 zeigen den Torsionsschwingungsdämpfer 2 im Ruhezustand, in dem keines der beiden Bauelemente 18, 20 mit einem Drehmoment beaufschlagt wird, so dass die beiden Bauelemente 18, 20 eine Ausgangsrelativdrehstellung zueinander einnehmen. In der Ausgangsrelativdrehstellung ist der erste Endabschnitt 72 des mindestens einen zwischenliegenden Federelements 34 in Umfangsrichtung 12 an dem ersten Stützabschnitt 54 des Mitnehmers 52 und in radialer Richtung 8 nach außen an dem ersten Umfangsabschnitt 58 des Mitnehmers 52 abgestützt. In entsprechender Weise ist der zweite Endabschnitt 74 des mindestens einen zwischenliegenden Federelements 34 in Umfangsrichtung 14 an dem zweiten Stützabschnitt 56 des Mitnehmers 52 und in radialer Richtung 8 nach außen an dem zweiten Umfangsabschnitt 60 des Mitnehmers 52 abgestützt. Ergänzend hierzu ist der erste Endabschnitt 72 des zwischenliegenden Federelements 34 in der Ausgangsrelativdrehstellung in der Umfangsrichtung 12 an dem vorderen Abschnitt 92 des ersten Endstützteils 40 und der zweite Endabschnitt 74 des zwischenliegenden Federelements 34 in Umfangsrichtung 14 an dem vorderen Abschnitt 96 des zweiten Endstützteils 50 abgestützt, wie dies in Fig. 4 angedeutet ist. Darüber hinaus ist der erste Endabschnitt 72 des zwischenliegenden Federelements 34 in der Ausgangsrelativdrehstellung zusätzlich bereits in radialer Richtung 8 nach außen an dem ersten Umfangsabschnitt 82 des ersten Endstützteils 40 abgestützt, während der zweite Endabschnitt 74 zusätzlich bereits in radialer Richtung 8 nach außen an dem ersten Umfangsabschnitt 84 des zweiten Endstützteils 50 abgestützt ist, was ebenfalls der Fig. 4 entnommen werden kann.

Wenngleich die zuvor beschriebene Abstützung in der Ausgangsrelativdrehstellung als vorteilhaft angesehen wird, so sei dennoch darauf hingewiesen, dass auch eine davon abweichende Abstützung in den Umfangsrichtungen 12, 14 und der radialen Richtung 8 der Endabschnitte 72, 74 des mindestens einen zwischenliegenden Federelements 34 möglich ist. So könnten beispielsweise die vorderen Abschnitte 92, 96 der Endstützteile 40, 50 gegenüber den Stützabschnitten 54, 56 derart zurückgesetzt sein, dass in der Ausgangsrelativdrehstellung eine Abstützung der Endabschnitte 72, 74 in den Umfangsrichtungen 12, 14 an den Endstützteilen 40, 50 nicht oder noch nicht erfolgt. Alternativ oder ergänzend könnten auch die Umfangsabschnitte 82, 84 der Endstützteile 40, 50 in der Ausgangsrelativdrehstellung derart gegenüber den Umfangsabschnitten 58, 60 zurückgesetzt sein, dass die Endabschnitte 72, 74 des mindestens einen zwischenliegenden Federelements 34 in der Ausgangsrelativdrehstellung nicht oder noch nicht in radialer Richtung 8 nach außen an den Endstützteilen 40, 50 abgestützt sind.

Während des Betriebes des Torsionsschwingungsdämpfers 2 kann aufgrund von Torsionsschwingungen oder Drehmomentstößen das erste Bauelement 18 in Umfangsrichtung 12 relativ zu dem zweiten Bauelement 20 von der Ausgangsrelativdrehstellung nach den Fig. 2 bis 6 in eine erste Relativdrehstellung verdreht werden, die in den Fig. 7 und 8 angedeutet ist. Durch das Verdrehen des ersten Bauelements 18 wird auch der Mitnehmer 52 in Umfangsrichtung 12 relativ zu dem zweiten Bauelement 20 verdreht, wodurch das erste Endstützteil 40 in Umfangsrichtung 14 tiefer in den Freiraum 70 eintaucht, während das zweite Endstützteil 50 in Umfangsrichtung 14 aus dem Freiraum 70 bewegt wird. Letzteres ist darauf zurückzuführen, dass das zweite Endstützteil 50 in Umfangsrichtung 12 an den Mitnehmern 98, die an dem zweiten Bauelement 20 feststehend angeordnet sind, abgestützt wird, wobei die Mitnehmer 98 insbesondere in den Fig. 1, 5, 7 und 8 angedeutet sind. In der vorliegenden Ausführungsform ist jeweils ein in axialer Richtung 4 hervorstehender Mitnehmer 98 an der hinteren Halbschale 22 und ein in axialer Richtung 6 hervorstehender Mitnehmer 98 an der vorderen Halbschale 24 des zweiten Bauelements 20 vorgesehen, wobei der Mitnehmer 52 und die zwischenliegenden Federelemente 34, 36 derart ausgebildet sind, dass diese in Umfangsrichtung 12, 14 zwischen den einander gegenüberliegenden Mitnehmern 98 hindurchtauchen können, während die Endstützteile 40, 50 bzw. deren hinterer Abschnitt 90, 94 eine derart große axiale Breite d aufweisen, dass diese in den Umfangsrichtungen 12, 14 an den Mitnehmern 98 anschlagen und somit nicht zwischen diesen hindurchtauchen können.

In der ersten Relativdrehstellung nach den Fig. 7 und 8 ist der erste Endabschnitt 72 des zwischenliegenden Federelements 34 in radialer Richtung 8 nach außen an dem ersten Endstützteil 40, genauer gesagt an dem ersten Umfangsabschnitt 82 des ersten Endstützteils 40, der den ersten Endabschnitt 72 zumindest in der ersten Relativdrehstellung in radialer Richtung 8 außen übergreift, jedoch nicht oder nicht mehr an dem Mitnehmer 52 oder dem ersten Umfangsabschnitt 58 des Mitnehmers 52 in radialer Richtung 8 nach außen, abgestützt. Darüber hinaus ist der erste Endabschnitt 72 des zwischenliegenden Federelements 34, 36 in Umfangsrichtung 12 an dem vorderen Abschnitt 92 des Radialabschnitts 78 des ersten Endstützteils 40, jedoch nicht oder nicht mehr an dem ersten Stützabschnitt 54 des Mitnehmers 52, abgestützt. Auf der gegenüberliegenden Seite ist der Endabschnitt 74 in der ersten Relativdrehstellung nach den Fig. 7 und 8 hingegen sowohl in Umfangsrichtung 14 an dem zweiten Stützabschnitt 56 als auch in radialer Richtung 8 nach außen an dem zweiten Umfangsabschnitt 60 des Mitnehmers 52 abgestützt, wobei keinerlei Abstützung des zweiten Endabschnitts 74 an dem zweiten Endstützteil 50 erfolgt.

Wird das erste Bauelement 18 abweichend von den Fig. 7 und 8 hingegen relativ zu dem zweiten Bauelement 20 von der Ausgangsrelativdrehstellung in der anderen Umfangsrichtung 14 in eine zweite Relativdrehstellung verdreht, so gelten die vorangehenden Ausführungen zu der ersten Relativdrehstellung in entsprechender oder analoger Weise. Das bedeutet, dass in der zweiten Relativdrehstellung der zweite Endabschnitt 74 des zwischenliegenden Federelements 34, 36 in radialer Richtung 8 nach außen an dem ersten Umfangsabschnitt 84 des zweiten Endstützteils 50 und nicht oder nicht mehr an dem Mitnehmer 52 oder dem zweiten Umfangsabschnitt 60 des Mitnehmers 52 abgestützt ist, während der erste Endabschnitt 72 des zwischenliegenden Federelements 34 in radialer Richtung 8 nach außen an dem Mitnehmer 52 oder dem ersten Umfangsabschnitt 58 des Mitnehmers 52 abgestützt ist. Auch hierbei gilt, dass der erste Umfangsabschnitt 84 des zweiten Endstützteils 50 den zweiten Endabschnitt 74 zumindest in der zweiten Relativdrehstellung radial außen übergreift. Außerdem erfolgt die Abstützung des zweiten Endabschnitts 74 in der zweiten Relativdrehstellung in Umfangsrichtung 14 sowie in radialer Richtung 8 nach außen nur noch über das zweite Endstützteil 50, während die Abstützung des ersten Endabschnitts 72 in der zweiten - nicht dargestellten - Relativdrehstellung in Umfangsrichtung 12 sowie in radialer Richtung 8 nach außen ausschließlich über den Mitnehmer 52 bzw. dessen Bestandteile erfolgt.

Wie bereits vorangehend angedeutet, sind die Endstützteile 40, 50 in keiner der möglichen Relativdrehstellungen zwischen den beiden Bauelementen 18, 20 in Umfangsrichtung 12, 14 unmittelbar an dem Mitnehmer 52 abgestützt, wie dies in Fig. 7 beispielhaft anhand des Abstandes g zwischen dem hinteren Abschnitt 90 des ersten Endstützteils 40 und dem Mitnehmer 52 in der ersten Relativdrehstellung angedeutet ist. Die Abstützung der Endstützteile 40, 50 an dem Mitnehmer 52 in Umfangsrichtung 12, 14 erfolgt vielmehr ausschließlich mittelbar über die zwischenliegenden Federelemente 34, 36.

### Bezugszeichenliste

- 2: Torsionsschwingungsdämpfer
- 4: axiale Richtung
- 6: axiale Richtung
- 8: radiale Richtung
- 10: radiale Richtung
- 12: Umfangsrichtung
- 14: Umfangsrichtung
- 16: Drehachse
- 18: erstes Bauelement
- 20: zweites Bauelement
- 22: hintere Halbschale
- 24: vordere Halbschale
- 26: erste Federanordnung
- 28: zweite Federanordnung
- 30: erste Federeinrichtung
- 32: zweite Federeinrichtung
- 34: zwischenliegendes Federelement
- 36: zwischenliegendes Federelement
- 38: Federelement
- 40: erstes Endstützteil
- 42: Stützteil
- 44: radial außen übergreifender Abschnitt
- 46: Federelement
- 48: Stützteil
- 50: zweites Endstützteil
- 52: Mitnehmer
- 54: erster Stützabschnitt
- 56: zweiter Stützabschnitt
- 58: erster Umfangsabschnitt
- 60: zweiter Umfangsabschnitt
- 62: Verbindungsabschnitt
- 64: fensterartige Öffnung
- 66: erster Axialabschnitt
- 68: zweiter Axialabschnitt
- 70: Freiraum
- 72: erster Endabschnitt
- 74: zweiter Endabschnitt
- 76: Zwischenabschnitt
- 78: Radialabschnitt
- 80: Radialabschnitt
- 82: erster Umfangsabschnitt
- 84: erster Umfangsabschnitt
- 86: zweiter Umfangsabschnitt
- 88: zweiter Umfangsabschnitt
- 90: hinterer Abschnitt
- 92: vorderer Abschnitt
- 94: hinterer Abschnitt
- 96: vorderer Abschnitt
- 98: Mitnehmer

- a: axiale Breite
- b: axialer Abstand
- c: axiale Breite
- d: axiale Breite
- e: axiale Breite
- f: axiale Breite
- g: Abstand

## Patentansprüche

1. Torsionsschwingungsdämpfer (2) mit zwei relativ zueinander verdrehbaren Bauelementen (18, 20) und mindestens einer Federanordnung (26) zur federelastischen Drehmitnahmekopplung der Bauelemente (18, 20), die eine erste Federeinrichtung (30) mit mindestens einem Federelement (38) und einem ersten Endstützteil (40) und eine zweite Federeinrichtung (32) mit mindestens einem Federelement (46) und einem dem ersten Endstützteil (40) in Umfangsrichtung (12, 14) zugewandten und von dem ersten Endstützteil (40) separat ausgebildeten zweiten Endstützteil (50) aufweist, wobei ein Mitnehmer (52) an einem der Bauelemente (18) vorgesehen ist, der zwischen dem ersten und zweiten Endstützteil (40, 50) angeordnet ist und einen dem ersten Endstützteil (40) zugewandten ersten Stützabschnitt (54) und einen von dem ersten Stützabschnitt (54) in Umfangsrichtung (12, 14) beabstandeten, dem zweiten Endstützteil (50) zugewandten zweiten Stützabschnitt (56) aufweist, zwischen denen mindestens ein zwischenliegendes Federelement (34) angeordnet ist, das über einen ersten Endabschnitt (72) des zwischenliegenden Federelements (34) in Umfangsrichtung (12) an dem ersten Stützabschnitt (54) und einen gegenüberliegenden zweiten Endabschnitt (74) des zwischenliegenden Federelements (34) in der entgegengesetzten Umfangsrichtung (14) an dem zweiten Stützabschnitt (56) abstützbar oder abgestützt ist, **dadurch gekennzeichnet, dass** das erste Endstützteil (40) der ersten Federeinrichtung (30) unmittelbar an dem ersten Endabschnitt (72) des zwischenliegenden Federelements (34) und das zweite Endstützteil (50) der zweiten Federeinrichtung (32) unmittelbar an dem zweiten Endabschnitt (74) des zwischenliegenden Federelements (34) abstützbar oder abgestützt ist.

2. Torsionsschwingungsdämpfer (2) nach Anspruch 1, **dadurch gekennzeichnet, dass** das erste Endstützteil (40) in keiner der möglichen Relativdrehstellungen zwischen den beiden Bauelementen (18, 20) unmittelbar an dem Mitnehmer (52) oder dem ersten Stützabschnitt (54) des Mitnehmers (52) oder/und das zweite Endstützteil (50) in keiner der möglichen Relativdrehstellungen zwischen den beiden Bauelementen (18, 20) unmittelbar an dem Mitnehmer (52) oder dem zweiten Stützabschnitt (56) des Mitnehmers (52) abstützbar oder abgestützt ist.

3. Torsionsschwingungsdämpfer (2) nach einem der Ansprüche 1 oder 2, **dadurch gekennzeichnet, dass** der Mitnehmer (52) zumindest teilweise in einen ersten Axialabschnitt (66) und einen zweiten Axialabschnitt (68) unterteilt ist, die unter Ausbildung eines in axialer Richtung (4, 6) zwischen den Axialabschnitten (66, 68) ausgebildeten Freiraums (70) voneinander beabstandet sind, in den die Endstützteile (40, 50) zum Zwecke der Abstützung an dem jeweiligen Endabschnitt (72, 94) des zwischenliegenden Federelements (34) in Umfangsrichtung (12, 14) einbringbar oder eingebracht sind, wobei vorzugsweise der erste oder/und zweite Stützabschnitt (54; 56) in den ersten und zweiten Axialabschnitt (66, 68) unterteilt ist.

4. Torsionsschwingungsdämpfer (2) nach einem der vorangehenden Ansprüche, **dadurch gekennzeichnet, dass** zumindest eines der Endstützteile (40; 50) einen Radialabschnitt (78; 80) mit einem hinteren Abschnitt (90; 94), an dem das Federelement (38; 46) der zugehörigen Federeinrichtung (30; 32) in Umfangsrichtung (14; 12) abstützbar oder abgestützt ist, und einem vorderen Abschnitt (92; 96) aufweist, an dem der Endabschnitt (72; 74) des zwischenliegenden Federelements (34) in Umfangsrichtung (12; 14) abstützbar oder abgestützt ist und der eine geringere axiale Breite (c) als der hintere Abschnitt (90; 94) aufweist, wobei die geringere axiale Breite (c) des vorderen Abschnitts (92; 96) vorzugsweise gleich der oder kleiner als eine axiale Breite (a) des Freiraums (70) oder/und eine axiale Breite (d) des hinteren Abschnitts (90; 94) vorzugsweise gleich der oder größer als die axiale Breite (a) des Freiraums (70), besonders bevorzugt gleich dem oder größer als ein axialer Abstand (b) zwischen den einander abgewandten Seiten des ersten und zweiten Axialabschnitts (66, 68) des Mitnehmers (52), ist.

5. Torsionsschwingungsdämpfer (2) nach einem der vorangehenden Ansprüche, **dadurch gekennzeichnet, dass** der erste und zweite Endabschnitt (72, 74) des zwischenliegenden Federelements (34) in radialer Richtung (8) nach außen an dem Mitnehmer (52) abstützbar oder abgestützt sind, wobei vorzugsweise ein zwischen dem ersten und zweiten Endabschnitt (72, 74) angeordneter Zwischenabschnitt (76) des zwischenliegenden Federelements (34) zumindest bis zu einer Grenzdrehzahl gegenüber einem den Zwischenabschnitt (76) radial außen übergreifenden Bereich beabstandet ist oder kontaktfrei bleibt und besonders bevorzugt an dem ersten Stützabschnitt (54) ein erster Umfangsabschnitt (58) zur Abstützung des ersten Endabschnitts (72) des zwischenliegenden Federelements (34) in radialer Richtung (8) nach außen und an dem zweiten Stützabschnitt (56) ein zweiter Umfangsabschnitt (60) zur Abstützung des zweiten Endabschnitts (74) des zwischenliegenden Federelements (34) in radialer Richtung (8) nach außen vorgesehen ist, die gegebenenfalls als Abschnitte eines Verbindungsabschnitts (62) ausgebildet sind, der die in radialer Richtung (8) nach außen weisenden Bereiche der Stützabschnitte (54, 56) in Umfangsrichtung (12, 14) miteinander verbindet.

6. Torsionsschwingungsdämpfer (2) nach Anspruch 5, **dadurch gekennzeichnet, dass** der den Zwischenabschnitt (76) radial außen übergreifende Bereich von dem Mitnehmer (52), vorzugsweise von dem Verbindungsabschnitt (62) des Mitnehmers (52), gebildet ist.

7. Torsionsschwingungsdämpfer (2) nach einem der vorangehenden Ansprüche, **dadurch gekennzeichnet, dass** eines der Bauelemente (18) relativ zu dem anderen Bauelement (20) von einer Ausgangsrelativdrehstellung in der einen Umfangsrichtung (12) in eine erste Relativdrehstellung verdrehbar ist, in der der erste Endabschnitt (72) des zwischenliegenden Federelements (34) in radialer Richtung (8) nach außen an dem ersten Endstützteil (40), vorzugsweise nicht an dem Mitnehmer (52) oder dem ersten Umfangsabschnitt (58) des Mitnehmers (52), abgestützt ist, während der zweite Endabschnitt (74) des zwischenliegenden Federelements (34) besonders bevorzugt in radialer Richtung (8) nach außen an dem Mitnehmer (52) oder dem zweiten Umfangsabschnitt (60) des Mitnehmers (52) abgestützt ist, oder/und in der anderen Umfangsrichtung (14) in eine zweite Relativdrehstellung verdrehbar ist, in der der zweite Endabschnitt (74) des zwischenliegenden Federelements (34) in radialer Richtung (8) nach außen an dem zweiten Endstützteil (50), vorzugsweise nicht an dem Mitnehmer (52) oder dem zweiten Umfangsabschnitt (60) des Mitnehmers (52) abgestützt ist, während der erste Endabschnitt (72) des zwischenliegenden Federelements (34) besonders bevorzugt in radialer Richtung (8) nach außen an dem Mitnehmer (52) oder dem ersten Umfangsabschnitt (58) des Mitnehmers (52) abgestützt ist.

8. Torsionsschwingungsdämpfer (2) nach Anspruch 7, **dadurch gekennzeichnet, dass** das erste oder/und zweite Endstützteil (40; 50) einen den ersten oder/und zweiten Endabschnitt (72; 74) des zwischenliegenden Federelements (34) zumindest in der ersten oder/und zweiten Relativdrehstellung radial außen übergreifenden ersten Umfangsabschnitt (82; 74) aufweist, an dem der erste oder/und zweite Endabschnitt (72; 74) des zwischenliegenden Federelements (34) in radialer Richtung (8) nach außen abstützbar oder abgestützt ist, und vorzugsweise einen das Federelement (38; 46) der ersten oder/und zweiten Federeinrichtung (30; 32) radial außen übergreifenden zweiten Umfangsabschnitt (86; 88) aufweist, an dem das Federelement (38; 46) der ersten oder/und zweiten Federeinrichtung (30; 32) in radialer Richtung (8) nach außen abstützbar oder abgestützt ist, wobei der erste Umfangsabschnitt (82; 84) besonders bevorzugt eine geringere axiale Breite (f) als der zweite Umfangsabschnitt (86; 88) oder/und die gleiche axiale Breite (f, c) wie der vordere Abschnitt (92; 96) des Radialabschnitts (78; 80) aufweist.

9. Torsionsschwingungsdämpfer (2) nach einem der vorangehenden Ansprüche, **dadurch gekennzeichnet, dass** die Endstützteile (40, 50) in radialer Richtung (8) nach außen an einem die erste und zweite Federeinrichtung (30, 32) radial außen übergreifenden Abschnitt (44) abstützbar oder abgestützt sind, wobei der die erste und zweite Federeinrichtung (30, 32) radial außen übergreifende Abschnitt (44) vorzugsweise von einem der Bauelemente (18, 20) gebildet ist, oder/und die erste oder/und zweite Federeinrichtung (30; 32) mindestens ein weiteres Stützteil (42; 48) zwischen den in Umfangsrichtung (12, 14) weisenden Enden der jeweiligen Federeinrichtung (30; 32) aufweist, über das die jeweilige Federeinrichtung (30; 32) in radialer Richtung (8) nach außen an einem die jeweilige Federeinrichtung (30; 32) radial außen übergreifenden Abschnitt (44) abstützbar oder abgestützt sind, wobei der die jeweilige Federeinrichtung (30; 32) radial außen übergreifende Abschnitt (44) vorzugsweise von einem der Bauelemente (20) gebildet ist.

10. Torsionsschwingungsdämpfer (2) nach einem der vorangehenden Ansprüche, **dadurch gekennzeichnet, dass** mindestens zwei zwischenliegende Federelemente (34, 36) vorgesehen sind, die vorzugsweise parallel, besonders bevorzugt konzentrisch, zueinander angeordnet sind, aufweist, wobei die zwischenliegenden Federelemente (34, 36) gegebenenfalls ausschließlich parallel zueinander angeordnet sind, oder/und dass das mindestens eine zwischenliegende Federelement (34) oder/und das mindestens eine Federelement (38; 46) der ersten oder/und zweiten Federeinrichtung (30; 32) als Schraubenfeder, vorzugsweise als gerade Schraubenfeder, ausgebildet ist.

## Claims

1. Torsional vibration damper (2) with two components (18, 20) which are rotatable relative to one another and with at least one spring arrangement (26) for the resiliently elastic rotary driving coupling of the components (18, 20), which spring arrangement has a first spring device (30) with at least one spring element (38) and with a first end support part (40) and has a second spring arrangement (32) with at least one spring element (46) and with a second end support part (50) which faces towards the first end support part (40) in a circumferential direction (12, 14) and which is formed separately from the first end support part (40), wherein a driver (52) is provided on one of the components (18), which driver is arranged between the first and second end support parts (40, 50) and has a first support portion (54), facing towards the first end support part (40), and a second support portion (56), spaced apart from the first support portion (54) in the circumferential direction (12, 14) and facing towards the second end support part (50), between which support portions there is arranged at least one interposed spring element (34) which, by way of a first end portion (72) of the interposed spring element (34), can be or is supported in the circumferential direction (12) on the first support portion (54), and an opposite second end portion (74) of the interposed spring element (34) can be or is supported in the opposite circumferential direction (14) on the second support portion (56), **characterized in that** the first end support part (40) of the first spring device (30) can be or is supported directly on the first end portion (72) of the interposed spring element (34), and the second end support part (50) of the second spring device (32) can be or is supported directly on the second end portion (74) of the interposed spring element (34) .

2. Torsional vibration damper (2) according to Claim 1, **characterized in that** the first end support part (40) cannot be supported or is not supported directly on the driver (52) or on the first support portion (54) of the driver (52) in any of the possible relative rotational positions between the two components (18, 20), and/or the second end support part (50) cannot be supported or is not supported directly on the driver (52) or on the second support portion (56) of the driver (52) in any of the possible relative rotational positions between the two components (18, 20).

3. Torsional vibration damper (2) according to either of Claims 1 and 2, **characterized in that** the driver (52) is at least partially divided into a first axial portion (66) and a second axial portion (68) which are spaced apart from one another so as to form a free space (70) which is formed in an axial direction (4, 6) between the axial portions (66, 68) and into which the end support parts (40, 50) can be introduced or are introduced in the circumferential direction (12, 14) for the purposes of support on the respective end portion (72, 94) of the interposed spring element (34), wherein, preferably, the first and/or second support portion (54; 56) is divided into the first and second axial portion (66, 68) .

4. Torsional vibration damper (2) according to any of the preceding claims, **characterized in that** at least one of the end support parts (40; 50) has a radial portion (78; 80) with a rear portion (90; 94), on which the spring element (38; 46) of the associated spring device (30; 32) can be or is supported in the circumferential direction (14; 12), and with a front portion (92; 96), on which the end portion (72; 74) of the interposed spring element (34) can be or is supported in the circumferential direction (12; 14) and which has a smaller axial width (c) than the rear portion (90; 94), wherein the smaller axial width (c) of the front portion (92; 96) is preferably equal to or smaller than an axial width (a) of the free space (70) and/or an axial width (d) of the rear portion (90; 94) is preferably equal to or greater than the axial width (a) of the free space (70), particularly preferably is equal to or greater than an axial spacing (b) between those sides of the first and second axial portions (66, 68) of the driver (52) which face away from one another.

5. Torsional vibration damper (2) according to any of the preceding claims, **characterized in that** the first and second end portions (72, 74) of the interposed spring element (34) can be or are supported outwardly in a radial direction (8) on the driver (52), wherein, preferably, at least up to a threshold rotational speed, an intermediate portion (76), arranged between the first and the second end portion (72, 74), of the interposed spring element (34) is spaced apart from or remains free from contact with a region which engages over the intermediate portion (76) radially at the outside, and, particularly preferably, on the first support portion (54), there is provided a first circumferential portion (58) for supporting the first end portion (72) of the interposed spring element (34) outwardly in the radial direction (8) and, on the second support portion (56), there is provided a second circumferential portion (60) for supporting the second end portion (74) of the interposed spring element (34) outwardly in the radial direction (8), which circumferential portions are possibly formed as portions of a connecting portion (62) which connects those regions of the support portions (54, 56) which point outwards in the radial direction (8) to one another in the circumferential direction (12, 14).

6. Torsional vibration damper (2) according to Claim 5, **characterized in that** the region which engages over the intermediate portion (76) radially at the outside is formed by the driver (52), preferably by the connecting portion (62) of the driver (52).

7. Torsional vibration damper (2) according to any of the preceding claims, **characterized in that** one of the components (18) is rotatable relative to the other component (20) from an initial relative rotational position in one circumferential direction (12) into a first relative rotational position, in which the first end portion (72) of the interposed spring element (34) is supported outwardly in the radial direction (8) on the first end support part (40), preferably not on the driver (52) or on the first circumferential portion (58) of the driver (52), while the second end portion (74) of the interposed spring element (34) is particularly preferably supported outwardly in the radial direction (8) on the driver (52) or on the second circumferential portion (60) of the driver (52), and/or in the other circumferential direction (14) into a second relative rotational position, in which the second end portion (74) of the interposed spring element (34) is supported outwardly in the radial direction (8) on the second end support part (50), preferably not on the driver (52) or on the second circumferential portion (60) of the driver (52), while the first end portion (72) of the interposed spring element (34) is particularly preferably supported outwardly in the radial direction (8) on the driver (52) or on the first circumferential portion (58) of the driver (52).

8. Torsional vibration damper (2) according to Claim 7, **characterized in that** the first and/or second end support part (40; 50) has a first circumferential portion (82; 74), which engages over the first and/or second end portion (72; 74) of the interposed spring element (34) radially at the outside at least in the first and/or second relative rotational position and on which the first and/or second end portion (72, 74) of the interposed spring element (34) can be or is supported outwardly in the radial direction (8), and preferably has a second circumferential portion (86; 88) which engages over the spring element (38; 46) of the first and/or second spring device (30; 32) radially at the outside and on which the spring element (38; 46) of the first and/or second spring device (30; 32) can be or is supported outwardly in the radial direction (8), wherein the first circumferential portion (82; 84) particularly preferably has a smaller axial width (f) than the second circumferential portion (86; 88) and/or the same axial width (f, c) as the front portion (92; 96) of the radial portion (78; 80) .

9. Torsional vibration damper (2) according to any of the preceding claims, **characterized in that** the end support parts (40, 50) can be or are supported outwardly in the radial direction (8) on a portion (44) which engages over the first and second spring device (30, 32) radially at the outside, wherein the portion (44) which engages over the first and second spring device (30, 32) radially at the outside is preferably formed by one of the components (18, 20), and/or the first and/or second spring device (30; 32) has at least one further support part (42; 48) between the ends, pointing in the circumferential direction (12, 14), of the respective spring device (30; 32), via which at least one further support part the respective spring device (30; 32) can be or is supported outwardly in the radial direction (8) on a portion (44) which engages over the respective spring device (30; 32) radially at the outside, wherein the portion (44) which engages over the respective spring device (30; 32) radially at the outside is preferably formed by one of the components (20).

10. Torsional vibration damper (2) according to any of the preceding claims, **characterized in that** at least two interposed spring elements (34, 36) are provided which are arranged preferably parallel, particularly preferably concentrically, with respect to one another, wherein the interposed spring elements (34, 36) are possibly arranged exclusively parallel with respect to one another, and/or **in that** the at least one interposed spring element (34) and/or the at least one spring element (38; 46) of the first and/or second spring device (30; 32) is formed as a helical spring, preferably as a straight helical spring.

## Revendications

1. Amortisseur de vibrations de torsion (2) comprenant deux composants (18, 20) pouvant être tournés l'un par rapport à l'autre et au moins un ensemble à ressort (26) qui est destiné à accoupler élastiquement en entraînement en rotation les composants (18, 20) et qui.comporte un premier dispositif à ressort (30) pourvu d'au moins un élément à ressort (38) et une première partie d'appui d'extrémité (40) et un deuxième dispositif à ressort (32) pourvu d'au moins un élément à ressort (46) et une deuxième partie d'appui d'extrémité (50) dirigée vers la première partie d'appui d'extrémité (40) dans la direction circonférentielle (12, 14) et formée séparément de la première partie d'appui d'extrémité (40), un élément d'entraînement (52) étant prévu sur l'un des composants (18) et étant disposé entre les première et deuxième parties d'appui d'extrémité (40, 50) et comportant une première portion d'appui (54) dirigée vers la première partie d'appui d'extrémité (40) et une deuxième portion d'appui (56) espacée de la première portion d'appui (54) dans la direction circonférentielle (12, 14) et dirigée vers la deuxième partie d'appui d'extrémité (50), portions d'appui entre lesquelles est disposé au moins un élément à ressort intermédiaire (34) qui s'appuie ou peut s'appuyer sur la première portion d'appui (54) par le biais d'une première portion d'extrémité (72) de l'élément à ressort intermédiaire (34) dans la direction circonférentielle (12) et sur la deuxième portion d'appui (56) par le biais d'une deuxième portion d'extrémité opposée (74) de l'élément à ressort intermédiaire (34) dans la direction circonférentielle opposée (14), **caractérisé en ce que** la première partie d'appui d'extrémité (40) du premier dispositif à ressort (30) s'appuie ou peut s'appuyer directement sur la première portion d'extrémité (72) de l'élément à ressort intermédiaire (34) et la deuxième partie d'appui d'extrémité (50) du deuxième dispositif à ressort (32) s'appuie ou peut s'appuyer directement sur la deuxième portion d'extrémité (74) de l'élément à ressort intermédiaire (34).

2. Amortisseur de vibrations de torsion (2) selon la revendication 1, **caractérisé en ce que** la première partie d'appui d'extrémité (40) ne s'appuie ou ne peut s'appuyer dans aucune des positions de rotation relatives possibles entre les deux composants (18, 20) directement sur l'élément d'entraînement (52) ou sur la première portion d'appui (54) de l'élément d'entraînement (52) et/ou la deuxième partie d'appui d'extrémité (50) ne s'appuie ou ne peut s'appuyer dans aucune des positions de rotation relatives possibles entre les deux composants (18, 20) directement sur l'élément d'entraînement (52) ou sur la deuxième portion d'appui (56) de l'élément d'entraînement (52) .

3. Amortisseur de vibrations de torsion (2) selon l'une des revendications 1 et 2, **caractérisé en ce que** l'élément d'entraînement (52) est au moins partiellement divisé en une première portion axiale (66) et une deuxième portion axiale (68), lesquelles sont espacées l'une de l'autre en formant un espace libre (70) qui est ménagé dans la direction axiale (4, 6) entre les portions axiales (66, 68) et dans lequel les parties d'appui d'extrémité (40, 50) sont introduites ou peuvent être introduites afin de s'appuyer sur la portion d'extrémité respective (72, 94) de l'élément à ressort intermédiaire (34) dans une direction circonférentielle (12, 14), la première et/ou la deuxième portion d'appui (54 ; 56) étant de préférence divisées en les première et deuxième portions axiales (66, 68).

4. Amortisseur de vibrations de torsion (2) selon l'une des revendications précédentes, **caractérisé en ce que** l'une au moins des parties d'appui d'extrémité {40 ; 50) comporte une portion radiale (78 ; 80) pourvue d'une portion arrière (90 ; 94), sur laquelle l'élément à ressort (38 ; 46) du dispositif à ressort associé (30 ; 32) s'appuie ou peut s'appuyer dans la direction circonférentielle (14 ; 12), et une portion avant (92 ; 96) sur laquelle la portion d'extrémité (72 ; 74) de l'élément à ressort intermédiaire (34) s'appuie ou peut s'appuyer dans la direction circonférentielle (12 ; 14) et qui a une largeur axiale (c) inférieure à celle de la portion arrière (90 ; 94), la largeur axiale inférieure (c) de la portion avant (92 ; 96) étant de préférence inférieure ou égale à la largeur axiale (a) de l'espace libre (70) et/ou la largeur axiale (d) de la portion arrière (90 ; 94) étant de préférence supérieure ou égale à la largeur axiale (a) de l'espace libre (70), de manière particulièrement préférée supérieure ou égale à la distance axiale (b) entre les côtés opposés des première et deuxième portions axiales (66, 68) de l'élément d'entraînement (52).

5. Amortisseur de vibrations de torsion (2) selon l'une des revendications précédentes, **caractérisé en ce que** les première et deuxième portions d'extrémité (72, 74) de l'élément à ressort intermédiaire (34) s'appuient ou peuvent s'appuyer sur l'élément d'entraînement (52) dans la direction radiale (8) vers l'extérieur, de préférence une portion intermédiaire (76) de l'élément à ressort intermédiaire (34), disposée entre les première et deuxième portions d'extrémité (72, 74), étant espacée ou restant sans contact, au moins jusqu'à une vitesse de rotation limite, par rapport à une région recouvrant radialement à l'extérieur la portion intermédiaire (76), et de manière particulièrement préférée une première portion circonférentielle (58) étant prévue sur la première portion d'appui (54) pour l'appui de la première portion d'extrémité (72) de l'élément à ressort intermédiaire (34) dans une direction radiale (8) vers l'extérieur et une deuxième portion circonférentielle (60) étant prévue sur la deuxième portion d'appui (56) pour l'appui de la deuxième portion d'extrémité (74) de l'élément à ressort intermédiaire (34) dans une direction radiale (8) vers l'extérieur, lesquelles portions circonférentielles sont éventuellement conçues comme des portions d'une portion de liaison (62) qui relie entre elles dans la direction circonférentielle (12, 14) les régions des portions d'appui (54, 56) qui sont orientées dans la direction radiale (8) vers l'extérieur.

6. Amortisseur de vibrations de torsion (2) selon la revendication 5, **caractérisé en ce que** la région qui recouvre radialement vers l'extérieur la portion intermédiaire (76) est formée par l'élément d'entraînement (52), de préférence par la portion de liaison (62) de l'élément d'entraînement (52).

7. Amortisseur de vibrations de torsion (2) selon l'une des revendications précédentes, **caractérisé en ce que** l'un des composants (18) peut être mis en rotation par rapport à l'autre composant (20) depuis une position de rotation relative initiale dans l'une des directions circonférentielles (12) jusque dans une première position de rotation relative dans laquelle la première portion d'extrémité (72) de l'élément à ressort intermédiaire (34) s'appuie dans une direction radiale (8) vers l'extérieur sur la première partie d'appui d'extrémité (40), de préférence ne s'appuie pas sur l'élément d'entraînement (52) ou la première portion circonférentielle (58) de l'élément d'entraînement (52), tandis que la deuxième portion d'extrémité (74) de l'élément à ressort intermédiaire (34) s'appuie de manière particulièrement préférée dans une direction radiale (8) vers l'extérieur sur l'élément d'entraînement (52) ou la deuxième portion circonférentielle (60) de l'élément d'entraînement (52), et/ou dans l'autre direction circonférentielle (14) peut tourner jusque dans une deuxième position de rotation relative dans laquelle la deuxième portion d'extrémité (74) de l'élément à ressort intermédiaire (34) s'appuie dans une direction radiale (8) vers l'extérieur sur la deuxième partie d'appui d'extrémité (50), de préférence ne s'appuie pas sur l'élément d'entraînement (52) ou la deuxième portion circonférentielle (60) de l'élément d'entraînement (52), tandis que la première portion d'extrémité (72) de l'élément à ressort intermédiaire (34) s'appuie de manière particulièrement préférée dans une direction radiale (8) vers l'extérieur sur l'élément d'entraînement (52) ou la première portion circonférentielle (58) de l'élément d'entraînement (52).

8. Amortisseur de vibrations de torsion (2) selon la revendication 7, **caractérisé en ce que** la première et/ou la deuxième partie d'appui d'extrémité (40 ; 50) comporte une première portion circonférentielle (82 ; 74), qui recouvre radialement à l'extérieur la première et/ou la deuxième portion d'extrémité (72 ; 74) de l'élément à ressort intermédiaire (34) au moins dans la première et/ou deuxième position de rotation relative et sur laquelle la première et/ou la deuxième portion d'extrémité (72 ; 74) de l'élément à ressort intermédiaire (34) s'appuie ou peut s'appuyer dans une direction radiale (8) vers l'extérieur, et comporte de préférence une deuxième portion circonférentielle (86 ; 88) qui recouvre radialement vers l'extérieur l'élément à ressort (38 ; 46) du premier et/ou deuxième dispositif à ressort (30 ; 32) et sur laquelle l'élément à ressort (38 ; 46) du premier et/ou deuxième dispositif à ressort (30 ; 32) s'appuie ou peut s'appuyer dans une direction radiale (8) vers l'extérieur, la première portion circonférentielle (82 ; 84) ayant de préférence une largeur axiale (f) inférieure à celle de la deuxième portion circonférentielle (86 ; 88) et/ou la même largeur axiale (f, c) que la portion avant (92 ; 96) de la portion radiale (78 ; 80).

9. Amortisseur de vibrations de torsion (2) selon l'une des revendications précédentes, **caractérisé en ce que** les parties d'appui d'extrémité (40, 50) s'appuient ou peuvent s'appuyer dans une direction radiale (8) vers l'extérieur sur une portion (44) qui recouvre radialement à l'extérieur les premier et deuxième dispositifs à ressort (30, 32), la portion (44) qui recouvre radialement à l'extérieur les premier et deuxième dispositifs à ressort (30, 32) étant de préférence formée par l'un des composants (18, 20) et/ou les premier et/ou deuxième dispositifs à ressort (30 ; 32) comportant au moins une autre partie d'appui (42 ; 48) qui est située entre les extrémités du dispositif à ressort respectif (30 ; 32) qui sont orientées dans la direction circonférentielle (12, 14) et par le biais de laquelle le dispositif à ressort respectif (30 ; 32) s'appuie ou peut s'appuyer dans la direction radiale (8) vers l'extérieur sur une portion (44) recouvrant radialement à l'extérieur le dispositif à ressort respectif (30 ; 32), la portion (44) qui recouvre radialement à l'extérieur le dispositif à ressort respectif (30 ; 32} étant de préférence formée par l'un des composants (20).

10. Amortisseur de vibrations de torsion (2) selon l'une des revendications précédentes, **caractérisé en ce qu'**au moins deux éléments à ressort intermédiaires (34, 36) sont prévus qui sont de préférence disposés parallèlement, de manière particulièrement préférée concentriquement, les uns aux l'autres, les éléments à ressort intermédiaires (34, 36) étant éventuellement disposés exclusivement parallèlement les uns aux autres, et/ou **en ce que** l'au moins un élément à ressort intermédiaire (34) et/ou l'au moins un élément à ressort (38 ; 46) des premier et/ou deuxième dispositifs à ressort (30 ; 32) étant conçus comme un ressort hélicoïdal, de préférence comme un ressort hélicoïdal droit.
